# EUROPÄISCHE PATENTANMELDUNG

(11) **EP 3 904 560 A1**
(43) Veröffentlichungstag der Anmeldung: **03.11.2021**
(21) Anmeldenummer: 21170457.2
(22) Anmeldetag: 26.04.2021
(51) Int. Cl.: C25B 1/04, C25B 9/23, C25B 9/75, C25B 9/77, C25B 11/032, C25B 11/052, H01M 8/0243, H01M 8/0245

(54) **GAS-DIFFUSIONS-LAYER SOWIE ELEKTROLYSEUR ODER BRENNSTOFFZELLE MIT EINEM SOLCHEN GAS-DIFFUSIONS-LAYER**

(30) Priorität: 27.04.2020 DE 102020111436
(71) Anmelder: Oberland Mangold GmbH, 82438 Eschenlohe (DE)
(72) Erfinder: MANGOLD, Christian, 82467 Garmisch-Partenkirchen (DE); MANGOLD, Matthias, 82438 Eschenlohe (DE); KNAB, Christian, 82467 Garmisch-Partenkirchen (DE)
(74) Vertreter: Weickmann & Weickmann PartmbB

(57) **Zusammenfassung**

Um einen Elektrolyseur (100) - sei es mit einer für Elektrolyt nicht durchlässigen Membran (M) nach dem PEM-Prinzip oder einem für Elektrolyt durchlässigen Diaphragma dem alkalischen Prinzip - oder eine Brennstoffzelle kostengünstiger herstellen zu können, werden erfindungsgemäß Gas-Diffusion-Lehrer (GDL) und diese umfassende Trägerelemente (T), die beidseits an die Membran (M) oder das Diaphragma angelegt werden müssen und dem Ableiten der an der aktiven Schicht zwischen Membran (M) bzw. Diaphragma und GDL entstehenden Gase (G) dienen, vorgeschlagen.

Vorzugsweise wird dabei eine dreidimensional strukturierte Folie (3), mit oder ohne Durchbrüche (13), verwendet, entweder einzeln oder als abgetrennte Schicht von einem Stapel oder Wickel, so dass die Hauptebene (3") der Folie (3) quer oder auch parallel zur Frontfläche (GDLv), der Kontaktfläche, des GDL liegen kann.

Da die Gas-Kanäle (20) von der Membran (M) bzw. Diaphragma weg einen zunehmenden Querschnitt besitzen sollen, wird die Frontfläche des GDL vorzugsweise mit einer Beschichtung (6) oder Verfüllung (6) aus einem fein vorliegen Pulvermaterial, versehen, und dieses insbesondere danach gesintert.

Notwendige Sinter- oder Lötvorgänge können in der Abfolge der thermischen Vorgänge beginnend mit dem höchsten Temperaturniveau auf einfache Art und Weise, gegebenenfalls in ein und demselben Ofen, hintereinander durchgeführt werden.

## Beschreibung

### I. Anwendungsgebiet

Die Erfindung betrifft einen Elektrolyseur, insbesondere einen Wasser-Elektrolyseur, also eine Vorrichtung zum Aufspalten von Wasser in Wasserstoff und Sauerstoff mittels elektrischen Stromes und ebenso eine umgekehrt arbeitende Brennstoffzelle, die aber im Wesentlichen aus den gleichen Bauteilen aufgebaut ist.

### II. Technischer Hintergrund

Von den bekannten Funktionsprinzipien und Bauformen werden die so genannte alkalische Elektrolyse am häufigsten und die so genannte PEM-Elektrolyse zunehmend angewandt.

In beiden Fällen liegt an den beiden Seiten einer für bestimmte Ionen-Größen durchlässigen Membran (membrane electrode assembly MEA), je ein so genannter gas-diffusion-layer *GDL oder auch* porous transport layer PTL genannt, an, um die an der aktiven Schicht zwischen GDL und Membran durch Aufspaltung des meist flüssigen Grundmaterials, insbesondere Wasser, fast explosionsartig entstehenden Gase - die ein etwa 1000-faches Volumen als das zugeführte flüssige Ausgangsmaterial besitzen - abzutransportieren und dadurch einen fortlaufenden Aufspaltungs-Prozess erst ermöglichen.

An der aktiven Schicht kann eine separate flächige Elektrode anliegen, oder die GDL besteht - was die übliche Bauform ist - aus elektrisch leitenden Material, so dass der für die Aufspaltung benötigte Strom über die GDL zur aktiven Schicht geführt wird, und diese dann zusätzlich die Aufgabe eines Stromverteilers, also einer Elektrode, besitzt, mit der der Strom an die aktive Schicht, möglichst gut verteilt über die gesamte Fläche der aktiven Schicht, zugeführt wird.

Zu diesem Zweck wird die Vorderseite des GDL häufig geschliffen oder möglichst plan hergestellt, um beim Aneinanderpressen zwar an der aktiven Schicht möglichst viele einzelne und voneinander getrennte Kontaktpunkte oder kleine Kontaktflächen als Nukleuspunkte zu erzielen, andererseits jedoch die aktive Schicht und/oder die Membran nicht durch eine zu raue Oberfläche des GDL zu beschädigen, wobei diese Kontaktstellen zwar möglichst eng benachbart sein sollen, dazwischen aber bereits Hohlräume als Beginn von Kanälen zum Abführen der Gase vorhanden sein sollen, durch die das Gas quer zur Hauptebene zur Rückseite des GDL strömen kann.

Dabei ist es bekannt, dass der Prozess gefördert wird, wenn diese Kanäle, die am Entstehungsort der Gase noch einen sehr kleinen Querschnitt besitzen können, in ihrem Verlauf von der Kontaktfläche weg einen zunehmend größeren Querschnitt aufweisen, um das Agglomerieren der Gas-Moleküle zu erleichtern und einen größeren Volumenstrom bei geringerer Kapillar-Wirkung und Abbremsen der Strömung durch Anhaften der Randschichten der Strömung an den Kanalwänden zu ermöglichen.

Dabei ist es wichtig, die hier vorliegenden Größenordnungen vor Augen zu haben:
So sollen die Querschnitte der Kanäle an ihrem Beginn, also an der Frontfläche, einen Durchmesser von nach Möglichkeit nur einigen µm aufweisen, um einen möglichst geringen Abstand der wirksamen Nukleuspunkte zwischen der als Elektrode wirkenden GDL und der aktiven Schicht an der Membran und damit eine möglichst große Anzahl von Kontaktpunkten/Kontaktflächen pro Flächeneinheit zu bieten. Derart kleine Kanäle mit entsprechenden Abmessungen reproduzierbar herzustellen, ist in der Praxis jedoch sehr schwierig, gerade bei in einer definierten Richtung verlaufenden Kanälen.

Ein Wasser-Elektrolyseur für die so genannte PEM-Elektrolyse umfasst eine für Wasserstoff-Protonen (H+), nicht jedoch für Sauerstoff-Ionen (O2-) bzw. Hydroxidionen (OH-) oder gasförmigen Sauerstoff oder gar eine Flüssigkeit, permeable Membran (proton-exchange-Membran = PEM), an die auf der einen Seite, der Anoden-Seite, Wasser herangeführt wird, sodass an der auf dieser Seite angeordneten aktiven Schicht - meist einer Iridium-Beschichtung als Katalysator auf der Membran dient - die Aufspaltung in die beiden Komponenten stattfindet. Die Wasserstoff-Ionen dringen durch die Membran hindurch und werden auf der anderen Seite der protonenleitenden Membran durch Aufnahme von Elektronen von der Kathode zu Wasserstoff-Molekülen, die abgeführt werden, während der gasförmige Sauerstoff auf der Wasser-Zufuhrseite abgeführt und gesammelt oder entsorgt wird.

Auf der Anodenseite, der Wasser-Seite, muss der Gas-Diffusions-Layer (GDL), nicht nur den entstehenden gasförmigen Sauerstoff von der Membran abführen, sondern auch das zugeführte Wasser über die Membranfläche verteilen. Zusätzlich muss auf der Wasser-Seite auch ein Großteil des zugeführten Wassers als flüssiges Wasser wieder abgeführt werden, denn es wird wesentlich mehr Wasser zugeführt, als elektrolytisch aufgespalten werden kann. Dieses Überschuss-Wasser dient der Kühlung des Elektrolyseurs.

Der entstehende reine Sauerstoff ist jedoch als starkes Reduktionsmittel extrem aggressiv, also hoch korrosiv, und greift die meisten Metalle an, so dass als Metall für den GDL und ggfs. auch die übrigen Bestandteile der Vorrichtung fast nur Titan verwendet werden kann.

Der bauliche Aufwand pro zu erzeugender Wasserstoffmenge sinkt, wenn die Größe der Membran und damit auch des GDL möglichst groß gewählt werden kann und gleichzeitig die Anzahl der Kontaktstellen pro Flächeneinheit möglichst groß ist.

Dies wirft dann massive Probleme auf, wenn die Elektrolyse-Vorrichtung - wie insbesondere bei einem PEM-Elektrolyseur - mit Differenzdruck betrieben wird, also auf der Wasserstoff-Seite, der Kathoden-Seite, ein hoher Druck von insbesondere über 80 bar herrscht, während der Druck auf der Zufuhrseite nur z.B. 2 bar beträgt.

Dieser hohe Druck auf der Wasserstoff-Seite wird dann angestrebt, wenn der erzeugte Wasserstoff, der beispielsweise aus Überschuss-Strom von Windkraftanlagen oder Fotovoltaikanlagen stammt, dem Erdgas, insbesondere in methanisierter Form, in vorhandenen Erdgas-Netzen beigemischt werden soll - was bis zu einem Anteil von 10 % problemlos für den Erdgasverbraucher möglich ist - da in Förderleitungen für Erdgas in der Regel ein Druck um die 80 bar herrscht.

Würde der Wasserstoff in dem Wasser-Elektrolyseur mit geringem Druck oder gar drucklos anfallen, müsste der erzeugte Wasserstoff aufwendig mechanisch mittels Verdichtern auf den Einspeisedruck, also einen Druck über dem Druck in der Förderleitung für Erdgas, verdichtet werden, was eines erheblichen baulichen Aufwandes angesichts der Leichtflüchtigkeit von Wasserstoff bedarf als auch eines zusätzlichen Energiebedarfs zum Betreiben solcher Verdichter.

Deshalb muss die Membran bei solchen Druckdifferenz-Elektrolyseuren abgestützt werden, weshalb derzeit häufig als GDL eine aus Titan-Kügelchen gesinterte Scheibe mit einer definierten Porosität verwendet wird, die eine Dicke von mehr als 1 mm besitzt.

Auch deren mechanische Stützwirkung, also Querbelastbarkeit, ist begrenzt, sodass die damit erzielbaren Membran-Flächen bisher 200 cm² selten übersteigen.

Gerade die als Ausgangsmaterial verwendeten Titan-Kügelchen mit einer exakten Größenverteilung sind jedoch teuer in der Herstellung und Beschaffung, und auch der notwendige Sinter-Vorgang ist technisch nicht einfach und nur mit relativ hohem Aufwand und Kosten so durchführbar, dass eine als GDL geeignete Sintermetall-Platte entsteht.

Somit ist dieses Bauteil für ca. 50 % der Kosten des gesamten Elektrolyseurs verantwortlich, weshalb kostengünstigere GDLs gesucht werden, die auch mehrlagig sein dürfen.

Falls die Poren oder Durchlässe, also Kanal-Anfänge, einer verwendeten GDL an dessen Vorderseite sehr groß sind, kann zwischen GDL und Membran noch ein Stromsammler (current concentrator = CC) vorhanden sein, dessen Poren oder Durchlässe kleiner sind, etwa ein Metall-Gewebe, um die Anzahl der Nukleusstellen zu vergrößern.

Mit seiner Rückseite liegt der GDL meist an einer Endplatte oder einer Bipolarplatte an und wird von dieser auch mechanisch abgestützt, wodurch ein so genanntes Trägerelement gebildet wird. In der zum GDL hin gerichteten Vorderseite der Endplatte sind Sammelkanäle mit deutlich größeren Querschnitten als die Kanäle im GDL vorhanden, die ein so genanntes Flowfield bilden, zum Abführen des gebildeten Wasserstoffes zum Rand des GDL und aus dem Elektrolyseur hinaus.

Ein Wasser-Elektrolyseur für die so genannte alkalische Elektrolyse umfasst im Wesentlichen die gleichen Bauteile, jedoch ist die Membran dabei keine Ionen-Austauscher-Membran, sondern lediglich ein Ionen-durchlässiges Diaphragma, um OH- Baugruppen hindurchtreten zu lassen.

Als Material wird dabei häufig Nickel verwendet, da bei der alkalischen Elektrolyse im Gegensatz zur PEM-Elektrolyse ein alkalisches und kein saures Milieu vorliegt.
Ferner wird in diesem Fall auf der Kathodenseite Wasser zu H⁺ und OH⁻ aufgespaltet, wobei das OH⁻ Ion zur Anode wandert und anschließend dort zu O2 und H2O umgesetzt wird, wofür meist auf beiden Seiten der Membran das Ausgangsmaterial, meist Wasser mit ca. 25 % KOH, zugeführt wird.

Ferner werden alkalische Elektrolyseure meistens mit einer sehr viel geringeren Druckdifferenz zwischen den beiden Seiten betrieben, meist mit einer Druckdifferenz von unter 2 bar.

Wasser-Elektrolyseure bestehen meist aus Stacks von vielen aufeinanderfolgende Elektrolyse-Zellen, von denen jede die notwendigen Schichten von der Anode bis zur Kathode aufweist.

### III. Darstellung der Erfindung

### a) Technische Aufgabe

Es ist daher die Aufgabe der vorliegenden Erfindung, einen Gas-Diffusions-Layer (GDL) für einen Elektrolyseur oder eine Brennstoffzelle zur Verfügung zu stellen, der einfach und kostengünstig herzustellen ist und eine hohe Abstützwirkung für die anliegende Membran bietet und damit eine große Membran-Fläche in dem Elektrolyseur ermöglicht. Ferner besteht die Aufgabe darin, ein Trägerelement für die Membran eines Elektrolyseurs zur Verfügung zu stellen, welches einen solchen GDL enthält, sowie ein Verfahren zum Herstellen eines Elektrolyseurs unter Verwendung dieser Elemente.

### b) Lösung der Aufgabe

Diese Aufgabe wird durch die Merkmale der Ansprüche 1, 12, 14, 15 und 17 gelöst. Vorteilhafte Ausführungsformen ergeben sich aus den Unteransprüchen.

Für einen Gas-Diffusions-Layer GDL wird diese Aufgabe dadurch gelöst, dass die wenigstens eine Schicht, also Traglage, aus der der GDL besteht, entweder aus mindestens einer dreidimensional strukturierten Folie oder aus einem für ein Gas durchströmbaren dreidimensionalen Material, insbesondere einem Feststoff, wie etwa einem Gewebe, einem Vlies oder einem offenzelligen erstarrten Schaum besteht.

Unter einer dreidimensional strukturierten Folie wird eine solche Folie verstanden, die von einem ebenen Ausgangszustand aus quer zu ihrer Hauptebene verformt wird, wobei die Verformungen sich in einer Fortschrittsrichtung weit, insbesondere über die gesamte Erstreckung der Folie, fortsetzen können wie bei einer gewellten Folie oder eine Vielzahl einzelner, nur in kleinen Bereichen vorhandener, Verformungen über die Fläche der Folie verteilt vorhanden sein können, also eine Vielzahl punktueller Verformungen vorliegen kann.

Auch das Ausstatten einer Folie mit Durchbrüchen wird als dreidimensionale Strukturierung verstanden, wobei solche Durchbrüche vor allem zusätzlich zu einer Verformung der Folie quer zu ihrer Hauptebene vorhanden sein können.

Der GDL ist plattenförmig und sollte quer zur Hauptebene dieser Plattenform, die durch die beiden größten Erstreckungsrichtungen des plattenförmigen GDL definiert wird, möglichst stabil sein, um die im Anwendungsfall herrschenden hohen Drücke quer zu seiner Hauptebene aufnehmen zu können. Dies gilt dementsprechend für die wenigstens eine, meist mehreren Traglagen, aus denen der GDL besteht.

Wenn die Folie aus einem elektrisch leitenden Material, insbesondere Metall, bestehen und dadurch die GDL stromleitfähig ist, kann diese neben der Funktion der Gasabführung auch die Zuführung von elektrischen Strom an die aktive Schicht, also eine möglichst gute Verteilung des Stromes über die Frontfläche des GDL, zur Verfügung stellen.

Durch die beschriebene Ausbildung der Traglage sollen einerseits die Herstellkosten stark reduziert werden und die Gas-Kanal-Querschnitte entlang der aus-Kanalrichtung möglichst reproduzierbar gestaltet werden, wobei der Querschnitt der Kanäle vom Anfang an der Vorderseite zum Ende, das vorzugsweise an der Rückseite liegt, niemals abnehmen sollte, da dies eine Engstelle und damit Drossel für die Gasabfuhr darstellen würde, sondern vorzugsweise höchstens Abschnitte mit gleich bleibenden Querschnitt besitzen, vorzugsweise sogar einen immer nur zunehmenden Querschnitt besitzen.

Diese auf den ersten Blick banalen Aussagen sind in der Praxis alles andere als leicht zu erreichen angesichts der hier vorliegenden Größenrelationen, die angestrebt werden, um einen möglichst effizienten Betrieb des Elektrolyseurs oder der Brennstoffzelle, in der ein solcher GDL eingesetzt werden soll, berücksichtigt.

Es ist angestrebt, dass der Querschnitt der Gas-Kanäle an der Vorderseite geringer ist als 800 µm², insbesondere geringer als 300 µm², insbesondere geringer als 100 µm², insbesondere geringer als 15 µm². Dies kann beispielsweise mittels einer porösen Schicht erreicht werden, die aus Pulverkörnern besteht, die einen Durchmesser von nicht mehr als 150 µm, besser nicht mehr als 30 µm besitzen.

Die Gas-Kanäle, insbesondere Matrix-Kanäle, wie sie an der Vorderseite - ohne poröse Schicht wie insbesondere oben erwähnt - einer aus Folie oder Drähten hergestellten Traglage münden, sollten einen Querschnitt von nicht mehr als 0,15 mm2 = 150.000 µm², besser nicht mehr als 0,1 mm2 = 100.000 µm², besser nicht mehr als 0,08 mm2 = 80.000 µm², besitzen.

Der Querschnitt der Gas-Kanäle an der Rückseite, also am Ende der Gas-Kanäle, soll dagegen möglichst größer als 0,15 mm² sein, insbesondere als 0,2 mm² sein, insbesondere sogar größer als 0,5 mm² sein, insbesondere sogar größer als 1 mm², insbesondere größer als 3 mm², insbesondere größer 5 mm², denn mit größerem Kanalquerschnitt am Ende der sich primär quer zur Hauptebene der Traglage verlaufenden Gas-Kanäle sinkt der Strömungswiderstand, der erzeugt wird durch das Anhaften der äußeren Schichten der Gasströmung an der Kanalwand.

Um diese Größenordnung zu erreichen besitzt die Folie eine Dicke von unter 150 µm, insbesondere unter 100 µm, insbesondere unter 60 µm, denn nur dadurch ist eine so feine dreidimensionale Strukturierung dieser Folie möglich, dass die entstehenden Kanäle die oben angegebenen geringen Querschnitte an ihrer Vorderseite aufweisen.

Die dreidimensionale Strukturierung der Folie quer zu ihrer Hauptebene besitzt vorzugsweise eine Erstreckung quer zu ihrer Hauptebene von insgesamt kleiner als 1,0 mm, besser kleiner als 0,5 mm, besser kleiner als 300 µm, besser kleiner als 200 µm, besser kleiner als 100 µm.

Wenn vorliegend von einer Verlaufsrichtung der Gas-Kanäle die Rede ist, die primär von der Vorderseite zur Rückseite verläuft, so ist dies so zu verstehen, dass eine Strömungsmöglichkeit von der Vorderseite zur Rückseite besteht, was nicht ausschließt, dass auch eine Strömungsmöglichkeit parallel zur Hauptebene der Traglage gegeben ist, indem beispielsweise parallel zur Hauptebene verlaufende, durch die Struktur der Folie bedingte Folien-Kanäle oder Gas-Kanäle miteinander verbunden sein können, z.B. über Durchbrüche in den Folien, oder die Kanäle aus den miteinander verbundenen Poren einer offenporigen Struktur bestehen, die dann natürlich in allen Richtungen durchgängig sind.

Dies ist mit ein Grund, warum die Gas-Kanäle von der Vorderseite zur Rückseite vorzugsweise einen zunehmenden Querschnitt besitzen, der eine Abfuhr der entstehenden Gase in diese Richtung begünstigt, selbst wenn auch Strömungsmöglichkeiten vom Entstehungsort der Gase parallel zur Hauptebene der Traglage bestehen, die Kanalquerschnitte in dieser Richtung jedoch nicht zunehmen, und darüber hinaus eine Strömung in dieser Richtung behindert ist durch in dieser Richtung liegende Kontaktpunkte und dort ebenfalls neu entstehendem Gas.

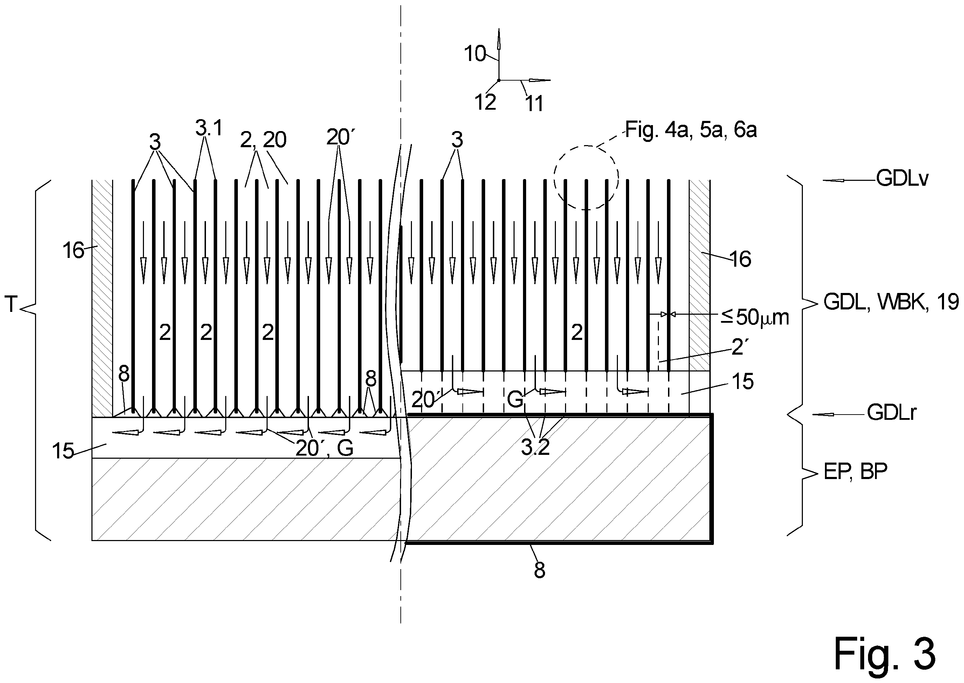

Sofern die Traglage eine dreidimensional strukturierte Folie umfasst, bestehen verschiedene Möglichkeiten, wie eine solche dreidimensionale Folie angeordnet werden kann:
Eine 1. Möglichkeit besteht darin, dass eine der beiden größten Erstreckungsrichtungen, der Haupterstreckungsrichtungen, der Folie, die deren Hauptebene aufspannen, axial, also quer zur durch die beiden Haupterstreckungsrichtungen auf gespannte Hauptebene des GDL verlaufen, wie in den **Figuren 3 bis 6b** dargestellt.

Obwohl der gesamte GDL in axialer Richtung möglichst dünn sein soll, und dementsprechend auch die einzelne Traglage, kann dies erreicht werden indem z.B. dreidimensional strukturierte Folien in einer Vielzahl von Lagen aufgewickelt oder aufgeschichtet werden, und von einem solchen Wickel oder geschichteten Block quer zur Verlaufsrichtung der Hauptebene der Folien eine dünne Scheibe abgetrennt wird, die dann eine solche Traglage darstellt, bei der die Haupterstreckungsrichtung der Folien dann in axialer Richtung der Traglage verläuft.

Wenn der Wickel oder Stapel - die Matrix - aus Folien solche Folien enthält, die als dreidimensionale Strukturierung eine Wellung - wie bei Wellblech - aufweist, und die einzelnen Erhebungen und Vertiefungen, durch die die Wellen gebildet werden, quer zur Hauptebene der von dem Block oder Wickel abgetrennten Scheibe liegen, ergeben sich dadurch in axialer Richtung verlaufende Folien-Kanäle oder Matrix-Kanäle.

Der Matrix-Kanalquerschnitt ist dabei etwa 3-eckig, insbesondere mit einer Höhe von unter 500 µm, besser unter 150 µm, besser unter 100 µm und einer demgegenüber etwa zwei- bis dreifachen Breite an der Basis des Dreiecks von immer noch unter 2000 µm, besser unter 1000 besser unter 400 µm. Bei einer beispielsweise höchstens 50 µm dicken Folie kann man damit eine Porosität, also Porenanteil, von mindestens 50 %, besser 70 %, besser 85 %, in der Regel erreichen.

Auf diese Art und Weise kann eine sehr feine Wabenstruktur - was vor allem für die PEM-Elektrolyse angestrebt wird - erzielt werden, die z.B. 12.000 cpsi aufweist, was einem Matrix-Kanalquerschnitt von etwa 0,05 mm² oder ca. 50.000 µm² entspricht. Für die alkalische Elektrolyse kann dagegen eine Wabenstruktur von z.B. 50 bis 400 cpsi ausreichend sein und angestrebt werden, was einem Matrix-Kanalquerschnitt von etwa 13 mm² - 2 mm² oder ca. 13.000 µm² - 2 mm² entspricht.

Je nach Verfahren, z.B. Drahterodieren oder Senkerodieren, mit dem man solche Scheiben von einem geschichteten oder gewickelten Folien-Block - im Folgenden kurz Wabenkörper oder Matrix genannt - abtrennt, werden die Folien an ihrer Stirnfläche, an der der Abtrenn-Vorgang durchgeführt wurde, verformt und/oder aufgeraut und/oder daran ein quer zur Hauptebene der Folie abstehender Grat ausgebildet.

Diese Grate verringern an der Vorderseite der Scheibe zum einen die dortigen Kanalquerschnitte und bewirken eine Rauigkeit der Schnittfläche in einer Größenordnung, die bei Anliegen der Frontfläche einer solchen Traglage in Form einer Scheibe eines Wabenkörpers an einer aktiven Schicht die gewünschte Vielzahl eng benachbart - mit Abständen im Bereich weniger µm - liegender Kontaktpunkte bietet.

Angestrebt ist vorzugsweise, mittels des Trennverfahrens und insbesondere direkt beim Abtrennen eine Rauheit Ra von 0,1 µm bis 10 µm, besser von 1 µm bis 6 µm, zu bewirken.

Als 2. Möglichkeit können auch durch Folien, deren Hauptebene parallel zur Hauptebene des GDL liegt, insbesondere mehrere in axialer Richtung aneinander liegende solche Folien, deren Haupterstreckungsrichtung parallel zur Hauptebene des GDL liegen, Gas-Kanäle erzeugt werden, die von der Frontfläche zur Rückseite verlaufen:
Dies kann erzielt werden, wenn die Folien Durchbrüche, also Durchgangsöffnungen, aufweisen, die Durchtrittsmöglichkeiten quer zu ihrer Hauptebene und damit in axialer Richtung der Traglage ermöglichen, was ebenfalls als eine 3-dimensionale Strukturierung gesehen wird, zumal beim Einbringen solcher Durchgangsöffnungen - egal ob dies durch mechanische Bearbeitung oder beispielsweise Laser-Beschuss erfolgt - die Ränder der Durchgangsöffnung quer zur Hauptebene der Folie verformt werden und dadurch die gesamte Folie bereits dreidimensional strukturiert wird.

Zusätzlich können die eingebrachten Durchbrüche in der Folie lediglich eine Sekundär-Struktur darstellen, die zusätzlich zu einer - von der Größenordnung her gröberen - Primär-Strukturierung der Folie, beispielsweise der erwähnten Wellung oder punktueller Prägung, vorhanden sein können.

Auch das sogenannte Streckmetall ist eine Bauform einer Folie, die einerseits dreidimensional strukturiert ist und andererseits Durchgangsöffnungen quer zu ihrer Hauptebene umfasst.

Sofern die Traglage aus mehreren Schichten von Folien besteht, kann sie sowohl solche Folien umfassen, deren Hauptebene axial zur Hauptebene des GDL liegt als auch solche, deren Hauptebene parallel dazu liegt, oder beides.

In der Praxis könnte also auf der oben beschriebenen Scheibe, die von einem Wabenkörper aus Folien abgetrennt wurde, auf deren Vorderseite und/oder Rückseite zusätzlich eine Folie aufgelegt werden, deren Haupterstreckungsebene parallel zur Haupterstreckungsebene des GDL liegt und die Durchbrüche aufweist.

Sofern die mittels Folien an der Frontfläche einer solchen Traglage entstehenden Kanalquerschnitte noch nicht klein genug sind und/oder die Anzahl von möglichen Kontaktpunkten zu einer anliegenden aktiven Schicht noch nicht groß genug ist, kann dies durch weitere Maßnahmen verbessert werden:
So kann die Traglage auf der Vorderseite mit einer offenporigen Beschichtung (multi porous layer) versehen werden, deren Porengröße nochmals geringer, insbesondere mindestens um den Faktor 3, besser den Faktor 5, besser den Faktor 8, besser den Faktor 10, besser den Faktor15 geringer, ist als der Anfang der Gas-Kanäle in der Vorderseite der Traglage, die aus Folie oder Drähten hergestellt ist.

Diese Matrix-Kanalanfänge im Frontbereich der Traglage können durch eine solche offenporige Beschichtung auch hinsichtlich ihres Querschnittes ganz gefüllt werden, sodass dann als Gas-Kanal-Anfang die Durchlässe durch die offenporige Beschichtung von der Frontfläche weg dienen.

Eine solche offenporige Beschichtung oder Füllung kann aus aneinanderhaftenden Körnern mit Hohlräumen dazwischen bestehen, insbesondere aus Sintermetall.

Hinsichtlich der angestrebten Anzahl von möglichen Kontaktpunkten kann die Frontseite der einzigen oder vordersten Lage von Folien oder Drähten auch eine solche Rauheit aufweisen, dass diese Anzahl erreicht wird gegenüber der Membran und/oder deren aktiver Schicht.

Der Wabenkörper kann zur Stabilisierung in einem umgebenden Rohrstück aufgenommen sein, der die abgetrennte Scheibe dann als Ring umgibt. Dadurch kann gegebenenfalls auch darauf verzichtet werden, die einzelnen Folien-Lagen - bei einem Wabenkörper können dies neben den dreidimensional strukturierten, zum Beispiel gewellten, Lagen auch dazwischenliegende glatte Lagen aus Folie sein - gegeneinander zu fixieren, da sie einerseits durch das umgebende Rohrstück in Kontakt zueinander gehalten werden und gegebenenfalls andererseits bereits durch das abtrennen einer Scheibe von einer Matrix die einzelnen Lagen der Folien gegeneinander verschweißt werden, falls dies ein unter entsprechender Temperatur ablaufendes Trennverfahren ist, wie etwa Drahterodieren.

Alternativ können die einzelnen Lagen dennoch schon vorher gegeneinander fixiert sein, insbesondere verlötet oder verschweißt sein, an ihren Kontaktstellen oder einem Teil ihrer Kontaktstellen und/oder eine solche Fixierung, insbesondere Verlötung oder Verschweißung, kann auch zwischen dem Wabenkörper und dem umgebenden Rohrstück vorhanden sein.

Zusätzlich können an einer solchen Scheibe eines Wabenkörpers an einer Seite, vorzugsweise der Rückseite, in der Hauptebene verlaufende Sammel-Kanäle eingearbeitet oder bereits vorhanden sein, die also parallel zur Hauptebene verlaufen, aber einen Querschnitt besitzen, der wesentlich größer ist, mindestens das 5-fache oder 10-fache oder 20-fache, der Gas-Kanalquerschnitte, die axial durch die Scheibe hindurch verlaufen, um an der Rückseite dieser Traglage eine Abfuhrmöglichkeit für die Gase in Richtung der Hauptebene, nämlich zu den Rändern der Traglage hin, zu schaffen.

Bei einer gewellten Folie, die parallel zur Membran oder dem Diaphragma liegt, können dies die zur Rückseite, also abgewandt von der Membran bzw. dem Diaphragma, offenen Wellentäler sein.

Das Material des GDL und insbesondere von dessen Traglagen hängt stark vom Einsatzzweck ab:
Wenn der GDL auch die Stromverteiler-Funktion bieten soll, also als Elektrode dienen soll, muss der GDL aus elektrisch leitfähigem Material, vorzugsweise aus Metall, bestehen. Je nach Anwendungsfall muss der GDL auch quer zu seiner Hauptebene hohen Belastungen widerstehen können angesichts von Betriebsdrücken bei einem Elektrolyseur oder einer Brennstoffzelle von beispielsweise 80 bar.

Selbst bei Einsatz in einem Elektrolyseur sind die Anforderungen an das Material unterschiedlich, je nach Funktionsprinzip des Elektrolyseurs:
Während bei einer PEM-(proton-exchange-membrane) -Elektrolyse der wegen des entstehenden reinen Sauerstoffs, der im sauren Milieu ein sehr starkes Reduktionsmittel darstellt und damit stark korrosiv wirkt, in der Regel nicht einmal Edelstahl eine lange Lebensdauer bietet, sondern meist Titan verwendet werden muss, kann bei alkalischer Elektrolyse unter alkalischen Umgebungsbedingungen bereits Nickel als Material ausreichen.

Die Materialwahl hat nicht nur einen starken Einfluss auf die Herstellungskosten, sondern auch auf das Temperaturniveau, welches erforderlich ist, um einzelne Schichten aus diesen Materialien miteinander zu verschweißen. Selbst wenn ein Fixieren nur mittels Löten geschieht, können abhängig vom Basismaterial nicht beliebige Lot-Materialien verwendet werden, sondern nur solche, die den im Einsatz herrschenden Bedingungen ausreichend lange widerstehen können.

So kann bei einem PEM-Elektrolyseur fast ausschließlich Titan als Material verwendet werden, und ein Verlöten mittels eines weniger edlen Metalls ist aufgrund der herrschenden Betriebsbedingungen kaum möglich, so dass nur ein Verschweißen oder Verkleben der Einzelteile aus Titan möglich ist.

Eine solche GDL kann durch Anordnen von einer Endplatte auf ihrer Rückseite, beispielsweise einer Bipolarplatte aus einem elektrisch leitenden Material, zu einem Trägerelement - der nächstgrößeren Funktionseinheit zur Verwendung in einem Elektrolyseur oder einer Brennstoffzelle - ergänzt werden, wobei dann wiederum der GDL ausgebildet sein soll wie vorstehend beschrieben.

Der GDL ist dann mit der Endplatte, insbesondere der Bipolarplatte, vorzugsweise verlötet oder verschweißt oder verklebt.

Gerade beim Verlöten kann dann in der Endplatte auf der dem GDL zugewandten Seite in dieser Fläche der Endplatte verlaufende Sammelkanäle, vorhanden sein, die dann einen deutlich größeren, mindestens 10-mal so großen, besser mindestens 20-mal so großen, Querschnitt besitzen wie die Gas-Kanäle oder Matrix-Kanäle im GDL, mit deren Hilfe Gas zum Rand des Trägerelementes abgeführt werden kann.

Zusätzlich kann die Endplatte, insbesondere die Bipolarplatte, vollflächig mit dem Lotmaterial beschichtet sein, mittels dessen das Verlöten des GDL an der Endplatte erfolgt.

Dies ermöglicht die Verwendung eines kostengünstigeren Materials für den Kern der Endplatte, wenn ausreichende Materialeigenschaften durch die vollflächige Beschichtung der Endplatte mit dem Lotmaterial erreicht werden können. Bei Endplatten oder Bipolarplatten aus Titan werden die Sammelkanäle vorzugsweise in der Rückseite des GDL eingearbeitet, da das Einarbeiten in der Frontseite der Platte aus Titan wegen der Härte des Materials aufwändig und wegen der hohen Kosten für Titan teuer ist, da dann ein wesentlich dickeres Ausgangsmaterial für eine solche Endplatte benötigt wird.

Zur Verwendung einer solchen GDL oder eines Trägerelementes in einem Elektrolyseur oder einer Brennstoffzelle muss dieser mit seiner Vorderseite an eine Membran oder ein Diaphragma angelegt werden, welches nach Funktionsprinzip des Elektrolyseurs oder der Brennstoffzelle unterschiedliche Durchlässigkeits-Eigenschaften hinsichtlich bestimmter Ionen aufweisen muss, z.B. bei der PEM-Elektrolyse eine für Elektrolyt nicht durchlässige Membran und bei der AEL-Elektrolyse ein für Elektrolyt durchlässiges Diaphragma.

Vorzugsweise wird das Trägerelement mit der GDL-Seite direkt an die Membran angelegt, wenn die GDL oder das Trägerelement jedoch keine Stromzuführungsfunktion besitzt, kann zwischen Membran und GDL als Elektrode eine stromführende Schicht vorhanden sein.

Ein Elektrolyseur, insbesondere ein Wasser-Elektrolyseur zum Erzeugen von Wasserstoff aus elektrisch aufgespaltetem Wasser, besteht in der Regel nicht nur aus einer Zelle, bestehend aus je einem beidseits an die Membran bzw. das Diaphragma angelegten Trägerelement, sondern aus einer Vielzahl solcher in axialer Richtung aufeinanderfolgender Zellen, von denen jede bekanntermaßen
- in axialer Richtung aufeinanderfolgend
- eine Anoden-Endplatte,
- einen Anoden-Gas-Diffusions-Layer,
- eine Membran oder ein Diaphragma
- einen Kathoden-Gas-Diffusions-Layer,
- eine Kathoden-Endplatte
als Schichten umfasst.

Die Endplatten können bis auf die erste und letzte Endplatte des Stapels von Zellen als Bipolar-Platten ausgebildet sein und für beide angrenzenden Zellen gleichzeitig als Stromzuführung dienen.

Darüber hinaus umfasst ein solcher Elektrolyseur natürlich eine Fixier-Vorrichtung, insbesondere eine Verschraubung, mit der die beiden Endplatten in axialer Richtung gegeneinander verspannt werden, um die einzelnen Zellen und innerhalb der Zellen die einzelnen Schichten in innigem Kontakt zueinander zu halten.

Erfindungsgemäß sind die beiden erwähnten Gas-Diffusion-Layer oder die die Endplatten mit umfassenden Trägerelemente wie vorgeschrieben ausgebildet.

Bekanntermaßen ist ferner als aktive Schicht meist eine katalytische Beschichtung zwischen der Membran und dem GDL vorhanden, meist aufgebracht auf der Membran, wobei die Beschichtung jedoch auch auf der Frontfläche des GDL vorhanden sein kann.

Ferner sind entlang der Ränder der einzelnen Schichten Dichtungen, vorzugsweise umlaufende Dichtungen, vorhanden, um den gesamten Elektrolyseur nach außen abzudichten.

Hinsichtlich des Verfahrens zur Herstellung eines solchen GDL wird die Aufgabe dadurch gelöst, dass vor allem zur Reduzierung der Herstellkosten ein solches Trägerelement wie folgt hergestellt werden kann:
Zunächst wird auf der Seite der Endplatte, auf der der GDL befestigt werden soll, oder der Rückseite des GDL ein erstes Lotmaterial aufgebracht und die Endplatte wird mit dem GDL verlötet.

Alternativ können GDL und Endplatte miteinander verschweißt oder verklebt werden.

Ferner kann im Bereich der Vorderseite des GDL eine Beschichtung oder Verfüllung aus einem offenporigen Material aufgebracht werden, vorzugsweise durch Aufbringen zunächst eines Haftmittels in diesem Bereich, und anschließende Anhaftung des Ausgangsmaterials, meist eines Pulvers, für die offenporige Schicht an dem Haftmittel. Die Beschichtung, insbesondere das Haftmittel, für die offenporige Beschichtung oder Verfüllung wird anschließend ausgehärtet, insbesondere gesintert, wenn es sich bei dem Pulver um ein Metallpulver handelt.

Dabei wird derjenige der beiden Vorgänge, also Verlöten oder Verschweißen mit der Endplatte oder Aushärten der Beschichtung oder Verfüllung, der das höhere Temperaturniveau erfordert, zuerst durchgeführt, um dadurch das Ergebnis des Vorganges mit dem niedrigeren Temperaturniveau, nicht zu zerstören.

Beim Verlöten mit der Endplatte kann das Lotmaterial flächendeckend zumindest auf der dem GDL zugewandten Seite der Endplatte, insbesondere auf der gesamten Oberfläche der Endplatte, aufgebracht werden, wodurch diese eine dichte Beschichtung mit dem Lotmaterial erhält, dessen Material entsprechend den Erfordernissen des Einsatzzweckes gewählt werden kann und muss, sodass das Rohmaterial der Endplatte, also deren Kern aus einem demgegenüber kostengünstigeren Material gewählt werden kann.

Sofern der GDL mehrere Traglagen umfasst, werden auch diese vorzugsweise gegeneinander fixiert, insbesondere miteinander verlötet oder verschweißt.

Zu diesem Zweck wird auf der Vorderseite der Traglage des GDL, auf der eine weitere Traglage fixiert werden soll, ein Lotmaterial aufgebracht, insbesondere indem zunächst ein Haftmittel aufgebracht wird, an dem dann zum Beispiel das pulverförmige Lotmaterial zum Anhaften gebracht werden kann, und anschließend ein Verlöten durchgeführt.

Auch unter Einbeziehung dieser Verbindungsvorgänge zwischen den einzelnen Traglagen eines GDL - unter Einbeziehung der Befestigung an der Endplatte oder ohne Einbeziehung der Befestigung an der Endplatte - werden die Befestigungsvorgänge wiederum in der Reihe vom notwendigen höchsten zum notwendigen niedrigsten Temperaturniveau durchgeführt.

Andersherum können zwei verschiedene Vorgänge bei ein und derselben Arbeitstemperatur und in einem Arbeitsschritt durchgeführt werden, wenn dabei verschiedene Materialien für die verschiedenen Vorgänge entsprechend ausgewählt werden:
Beispielsweise kann gleichzeitig ein Verlöten (etwa zwischen Endplatte und GDL) und Versintern (Körner der porösen Schicht) gleichzeitig durchgeführt werden, indem das Lotmaterial und das Sintermaterial so ausgewählt werden, dass die Sinter-Temperatur des Sinter-Materials der Löt-Temperatur des Lotmaterials entspricht.

Ein Verschweißen insbesondere verschiedener Lagen von Folien kann durchgeführt werden durch ein entsprechendes Trennverfahren zum Abtrennen einer Schicht aus einer Matrix von Folien oder der Kanten einer mit Drähten umwickelten Tragplatte, wenn das Trennverfahren unter einem entsprechenden Temperaturniveau abläuft, welches dieses Verschweißen bewirkt, wie etwa beim Funkenerodieren. Das Verschweißen an den Stirnflächen ist dabei in aller Regel ausreichend.

### c) Ausführungsbeispiele

Ausführungsformen gemäß der Erfindung sind im Folgenden beispielhaft näher beschrieben. Es zeigen:
- **Fig. 1a:**: eine Stirnansicht auf einen GDL in Form eines gewickelten Wabenkörpers,
- **Figur 1b:**: eine Stirnansicht auf einen GDL in Form eines gestapelten Wabenkörpers,
- **Figur 1c:**: eine Seitenansicht auf einen Wabenkörper bei entfernter äußerer Umhüllung,
- **Figur 1d:**: eine perspektivische Prinzip-Darstellung eines entstehenden Wickels,
- **Figur 2a:**: einen Folienstapel aus dreidimensional strukturierten Folien,
- **Figur 2b:**: eine Folie aus dem Folienstapel der **Figur 2a** in perspektivischer Ansicht,
- **Figur 3:**: einen Schnitt durch ein Trägerelement mit einem aus Folien bestehenden GDL, dessen Kanäle in axialer Richtung des Trägerelementes verlaufen, geschnitten in einer der Haupt-Erstreckungsrichtungen des Trägerelementes,
- **Figur 4a:**: einen vergrößerten Ausschnitt aus **Figur 3** mit einer 1. Bauform des dabei verwendeten GDL,
- **Figur 4b:**: einen vergrößerten Ausschnitt aus einer Stirn-Ansicht auf den GDL der **Figur 4a****,**
- **Figur 5a:**: einen vergrößerten Ausschnitt aus **Figur 3** mit einer 2. Bauform des dabei verwendeten GDL,
- **Figur 5b:**: einen vergrößerten Ausschnitt aus einer Stirn-Ansicht auf den GDL der **Figur 5a**,
- **Figur 6a:**: einen vergrößerten Ausschnitt einer 3. Bauform eines GDL, wie er bei dem Trägerelement der **Figur 3** verwendet werden könnte, in Blickrichtung der Figur 3,
- **Figur 6b:**: einen vergrößerten Ausschnitt aus einer Stirn-Ansicht auf den GDL der **Figur 6a****,**
- **Figur 7a:**: einen Schnitt durch ein Trägerelement mit einer 4. und einer 5. Bauform eines aus Folien bestehenden GDL, dessen Kanäle in einer der Haupt-Erstreckungsrichtungen des Trägerelementes verlaufen, geschnitten quer zu einer der Haupt-Erstreckungsrichtungen des Trägerelementes,
- **Figur 7b:**: eine Variante zu **Figur 7a**,
- **Figur 7c:**: einen Schnitt durch ein Trägerelement mit einer 6. Bauform eines aus Folien bestehenden GDL, dessen Kanäle in einer der HauptErstreckungsrichtungen des Trägerelementes verlaufen, geschnitten quer zu einer der Haupt-Erstreckungsrichtungen des Trägerelementes,
- **Figur 7d, e:**: Bauform-Kombinationen aus den Bauformen der Figuren **7a bis 7c**,
- **Figur 8a:**: einen Schnitt durch ein Trägerelement mit einer abgewandelten 5. Bauform gemäß **Figur 7a** eines aus Folie bestehenden GDL, dessen Kanäle in einer der Haupt-Erstreckungsrichtungen des Trägerelementes verlaufen, geschnitten quer zu einer der Haupt-Erstreckungsrichtungen des Trägerelementes,
- **Figur 8b:**: einen Schnitt durch ein Trägerelement mit einer 7. Bauform eines aus Folien bestehenden GDL, geschnitten quer zu einer der Haupt-Erstreckungsrichtungen des Trägerelementes,
- **Figur 9:**: einen Schnitt durch einen PEM-Elektrolyseur mit Trägerelementen gemäß der **Figur 3****.**

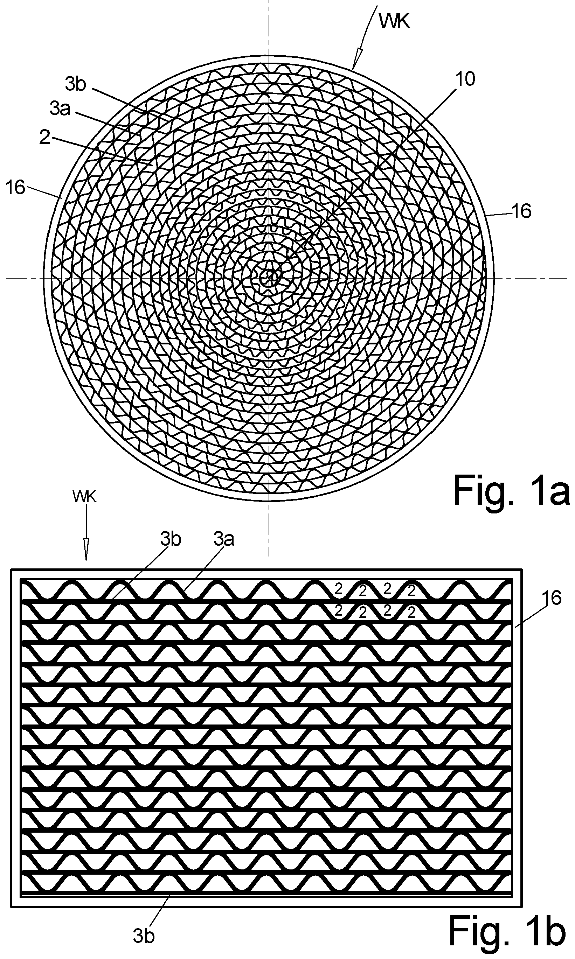

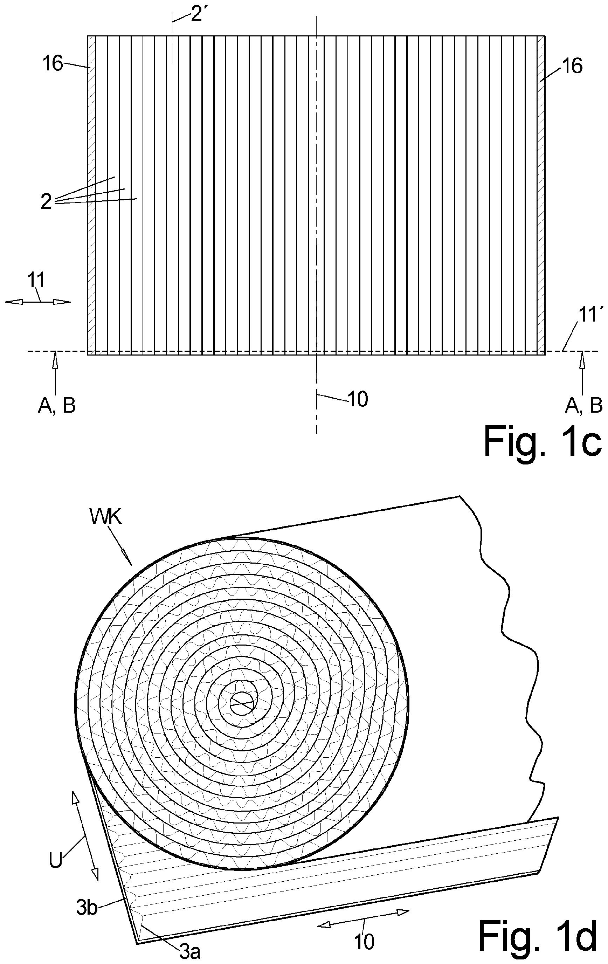

Die **Figuren 1a** und **1b** zeigen jeweils eine Stirnansicht eines durch Wickeln gemäß **Figur 1d** oder durch aufeinander Schichten hergestellten Wabenkörpers **WK,** der aus einer Vielzahl von aneinander liegenden Schichten von abwechselnd aufeinander folgenden und aneinander anliegenden glatten Folien **3b** und gewellten Folien **3a** bestehen, wobei die Verlaufsrichtung der einzelnen Welle, die die gewellte Folie **3a** bilden, die Blickrichtung der **Figuren 1a** und **1b** ist.

Dadurch entsteht zwischen den Folien eine Vielzahl von in Blickrichtung der **Figuren 1a** und **1b** verlaufender Waben-Kanäle **2,** durch die beispielsweise ein Gas **G** von der einen zur anderen Stirnfläche eines solchen Wabenkörpers **WK** frei hindurchströmen kann, die also frei durchströmbare Waben-Kanäle **2** sind, wobei der Kanal-Querschnitt sich verringern kann, wenn Hindernisse in den Kanal-Querschnitt hineinragen.

Damit die Lagen aus Folien **3** - bei der spiraligen Wicklung gemäß **Figur 1a** handelt es sich um lediglich eine glatte Folie und lediglich eine gewellte Folie, bei dem geschichteten Wabenkörper gemäß **Figur 1b** um jeweils eine Vielzahl solcher aufeinander geschichteter Folienstücke - in enger Anlage aneinander bleiben, ist der Wabenkörper **WK** jeweils in eine Rohrhülle **16** in Form eines Rohrstückes **16** aufgenommen, welches so dimensioniert ist, dass der gebildete Wabenkörper **WK** darin so eng aufgenommen ist, dass es bei einem Kontakt zwischen den einzelnen Folien bleibt, selbst wenn durch Temperaturveränderungen sich die Folien und ebenso das Rohrstück **16** ausdehnen.

**Figur 1c** zeigt eine Aufsicht auf einen solchen Wabenkörper **WK** quer zu dessen Waben-Kanalrichtung **2',** bei teilweiser Entfernung der Rohrhülle **16,** wodurch die nebeneinander liegenden Waben-Kanäle **2** und deren zueinander paralleler Verlauf sichtbar werden.

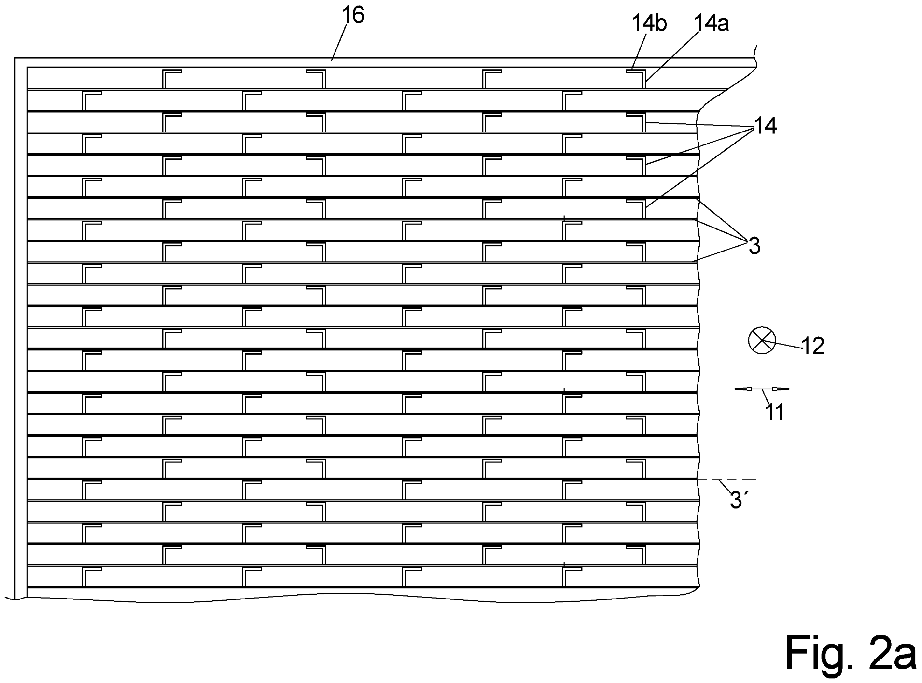

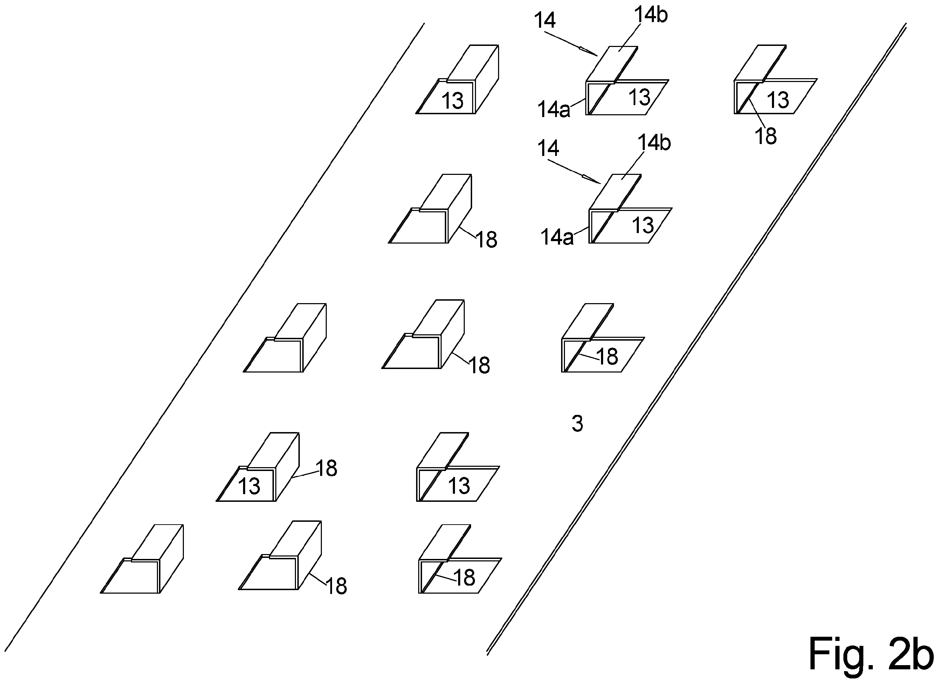

Während bei den Wabenkörpern der **Figuren 1a** und **1b** eine definierte Waben-Kanal-Richtung **2'** vorliegt, durch die ein Fluid wie etwa ein Gas **G** strömen kann - Gasströmungen quer hierzu sind nur möglich, wenn Durchbrüche in den Folien vorhanden sind und dadurch eine Verbindung zwischen zwei benachbarten Waben-Kanälen **2** gegeben ist - zeigt **Figur 2a** einen Stapel von 3-dimensional strukturierten und dadurch im aufeinander gestapelten Zustand beabstandeten Folien **3,** die keine vorgegebene Matrix-Kanal-Richtung besitzen:
Denn die 3-dimensionale Strukturierung der einzelnen Folie **3** besteht gemäß **Figur 2b** darin, dass aus der Folie eine Vielzahl von Laschen **14** ausgeprägt werden, die jeweils einen Durchbruch **13** durch die Folie **3** hinterlassen.

Die Laschen **14** werden so ausgeprägt, dass sie von der einen Kante **18** des Durchbruches **13,** über den sie mit dem Rest der Folie **3** verbunden bleiben, einen ersten Schenkel **14a** aufweisen, der sich quer, vorzugsweise lotrecht, zur Hauptebene der Folie **3** von dieser weg erstreckt, vorzugsweise bei allen Laschen **14** gleich weit, und sich an diesen als freies Ende ein hierzu gekröpfter zweiter Schenkel **14b,** anschließt, der als Anlagefläche für die nächste Traglage, z.B. einer Folie **3** oder einer BP, dient.

Sofern die Durchbrüche **13** und daran befestigten ausgeprägten Laschen **14** nicht eng aneinander stehen und immer die gleiche Richtung der Biegekanten aufweisen, entlang der die Laschen **14** gegenüber der Hauptebene der Folie **3** umgebogen sind, besitzt ein solcher Stapel aus Folien **3** keine bevorzugte Kanal-Richtung und kann von einem Fluid wie einem Gas sowohl in beiden Haupterstreckungs-Richtungen der Folien **3** durchströmt werden als auch quer zur Hauptebene **3"** der Folien **3,** nämlich durch die Durchbrüche **13** hindurch, wobei das Maß der Strömung in dieser Strömungs-Richtung von Anzahl und Größe der Durchbrüche **13** abhängt.

**Figur 3** zeigt eine prinzipielle erste Möglichkeit, wie man aus einer definiert dreidimensional strukturierten Folie eine Traglage **19** oder einen ganzen solchen **GDL -** mit sehr geringer Erstreckung in axialer Richtung **10** von etwa nur 0,1mm - 2 mm, etwa abgetrennt als Scheibe von einem längeren Wabenkörper **WK** - herstellen kann, wobei in diesem Fall die Waben-Kanal-Richtung **2'** der Waben- -Kanäle **2** in der axialen Richtung **10** des **GDL** verläuft, der im Rahmen der Erfindung verwenden kann, hier dargestellt im bereits mit einer Endplatte **EP,** beispielsweise einer Bipolar-Platte **BP,** verbundenen, insbesondere mit seinen ersten Stirnkanten **3.2** darauf aufgelöteten Zustand als Trägerelement **T.**

Dadurch besitzt der **GDL** an seiner Vorderseite **GDLv** eine Vielzahl von Öffnungen in Form der Kanäle **2** des Wabenkörpers **WK,** von denen aus ein Gas **G** in Richtung Rückseite **GDLr** und von dort in Sammel-Kanäle **15** mit wesentlich größerem Querschnitt strömen könnte, die hier in der linken Bildhälfte als in der Endplatte **EP** ausgebildet dargestellt sind und mit den Kanälen **2** in Verbindung stehen, jedoch ebenso gut wie in der rechten Bildhälfte dargestellt in der Rückseite **GDLr** des **GDL,** insbesondere des Wabenkörpers **WK,** eingearbeitet sein können.

Beim Einsatz in einem Elektrolyseur oder einer Brennstoffzelle sind möglichst viele einzelne, möglichst kleine, Kontaktstellen an den freien Stirnkanten **3.1** der Folien **3** zur Anlage an einer aktiven Schicht angestrebt, denn nur an diesen Kontaktstellen findet die gewünschte elektro-chemische Reaktion statt, z.B. das Entstehen des gewünschten Wasserstoffs, der über die Waben-Kanäle **2** abfließen können muss.

Deshalb können in diesem Anfangsbereich die zwischen den Kontaktstellen vorhandenen Kanalanfänge auch nochmals kleiner sein als die in **Figur 3** dargestellten regulären Waben-Kanal-Querschnitte im weiteren Verlauf der Waben-Kanäle **2**.

Während auf der linken Seite der **Figur 3** die einzelnen Folien **3** mit ihrer hinteren Stirnkante **3.2** einzeln mittels Lot **8** mit der ihr zugewandten Kontaktfläche der Endplatte **EP** verlötet oder verschweißt sind, ist in der rechten Bildhälfte die Endplatte **EP** vollflächig mit dem Lotmaterial **8** beschichtet, mittels dessen auch das Auflöten des Wabenkörpers **WK** erfolgt, was zusätzlich den Vorteil bietet, dass die Endplatte **EP,** auch wenn sie als Bipolar-Platte **BP** eingesetzt wird, auf der Außenfläche durchgängig mit einem Lotmaterial **8** beschichtet ist, welches die am späteren Einsatzort herrschenden Bedingungen aushält, beispielsweise Nickel bei einer alkalischen Elektrolyse, sodass das Rohmaterial der Endplatte aus einem anderen, kostengünstigeren Material gewählt werden kann als das Lotmaterial.

Dabei ist zusätzlich die Foliendicke **d** von etwa 50µm oder darunter eingezeichnet, um sich diese Größenordnung vor Augen zu halten, auch für die folgenden Ausführungen.

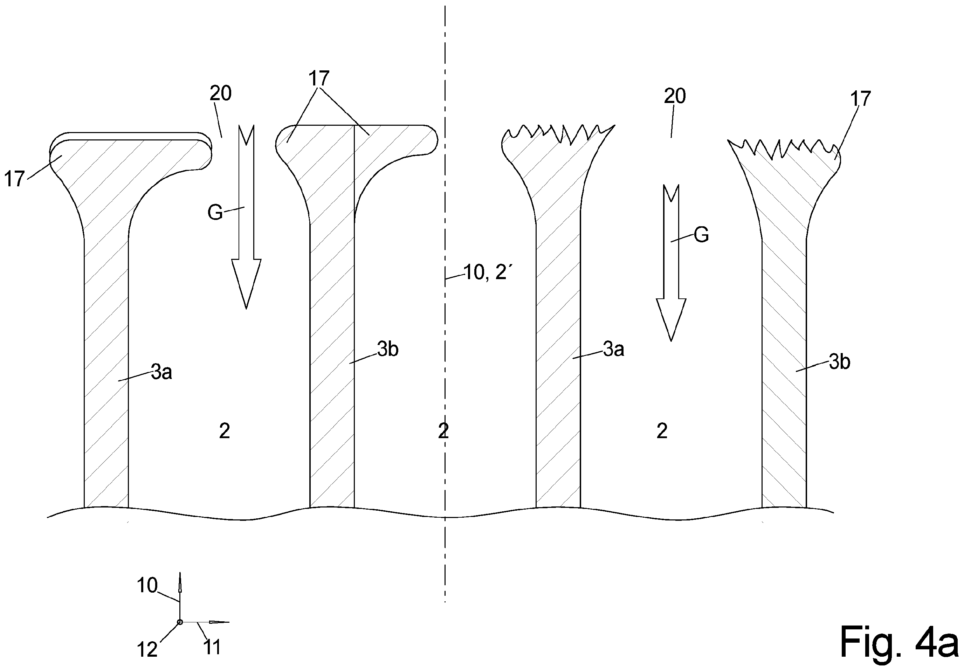

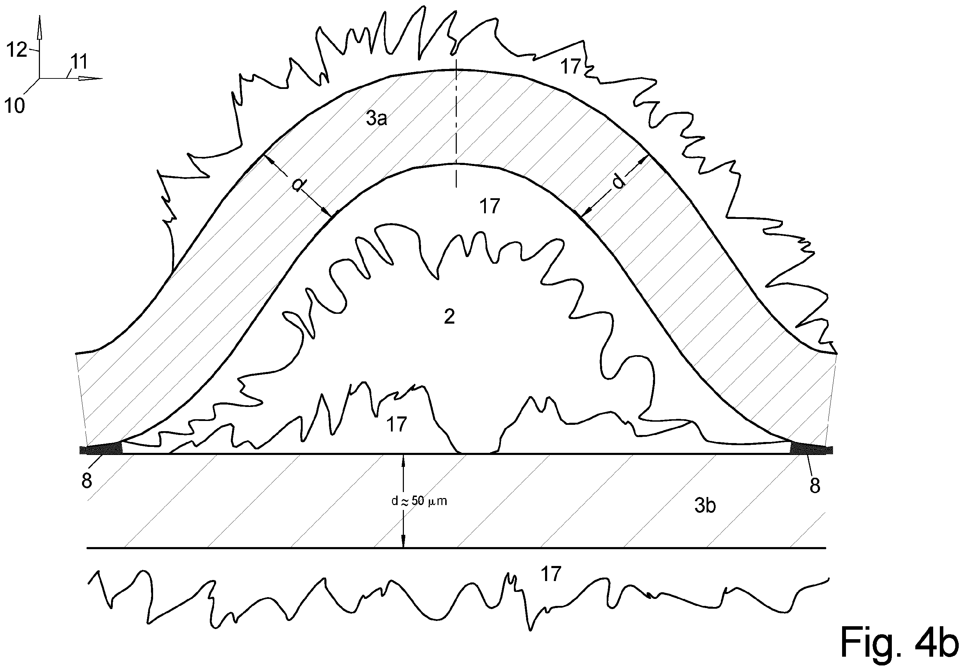

Wenn eine solche Scheibe von einem Wabenkörper **WK** abgetrennt wird, werden - abhängig vom Trennverfahren, sei es Funken-Erodieren, Wasserstrahlschneiden oder Lasern - ohnehin die freien Stirnkanten **3.1** der Folien **3** verformt und fransen in eine oder beide Querrichtungen zu ihrer Hauptebene aus, wie in **Figur 4b** dargestellt, sodass die durch das Trennverfahren bewirkten Ausfransungen **17** ohnehin den Querschnitt am Anfang der Kanäle **2** deutlich verringern, teilweise auf die Hälfte des normalen Querschnittes oder gar noch weniger. Die Ausfransungen **17** sind in **Figur 4a** betrachtet quer zur Haupt-Erstreckungsrichtung **2'** der Waben-Kanäle **2** dargestellt, und aus **Figur 4b** wird klar, dass sich diese Ausfransungen **17** nicht entlang der gesamten Länge der Stirnkanten **3.1** erstrecken müssen.

Diese Ausfransungen **17** bewirken auch, dass die Stirnkanten **3.1** - erst recht nicht über ihre gesamte Länge - alle in einer gemeinsamen Ebene liegen, sondern aus einer solchen gedachten Ebene eine Mikrostruktur in Form von Rücksprüngen und Vorsprüngen von Abschnitten von Stirnkanten **3.1** existieren, deren Erstreckung quer zu dieser gedachten Ebene jedoch so gering ist, z.B. unter 10 µm, dass sie bei Anliegen an einer aktiven Schicht, insbesondere einer Membran, diese nicht zerstören können sondern gerade die gewünschten, voneinander getrennten Kontaktstellen darstellen, wenn der Anpressdruck entsprechend gewählt wird.

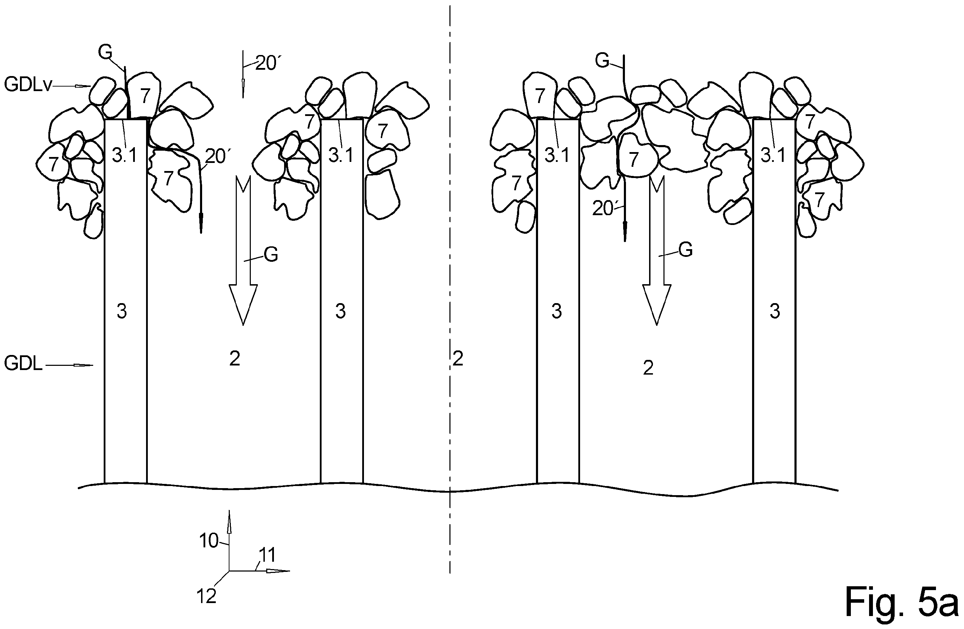

**Figur 5a** zeigt, wie man im Bereich der freien Stirnkanten **3.1** der Folien **3** einerseits den Querschnitt am Anfang der Waben-Kanäle **2** aktiv verringern kann und insbesondere die Anzahl möglicher Kontaktpunkte an dieser Vorderseite **GDLv** des Gas-Diffusions-Layers **GDL** vergrößern kann:
Zu diesem Zweck können im Bereich der freien Stirnkanten **3.1** der Folien **3** an dieser Granulat-Körner **7** oder besser Pulver-Körner **7** angelagert werden, die an der Vorderseite **GDLv** einerseits eine Vielzahl von möglichen Kontaktstellen bilden, andererseits zwischen den nicht fugenlos aneinander anliegenden Granulat-Körnern **7** Gas-Kanäle **20** bilden, deren Durchmesser insbesondere etwa um das 10-fache, also das 5- bis 15-fache, kleiner ist als der Querschnitt eines Waben-Kanales **2** zwischen den Folien **3,** also um oder unter 5 µm beträgt.

Auf diese Art und Weise kann an einem der Granulat-Körner **7** und dessen Kontaktfläche zu einer nicht dargestellten aktiven Schicht entstehendes Gas **G** durch Gas-Kanäle **20** zwischen den Granulat-Körnern **7** in den Kanal **2** hineinströmen.

Zusätzlich können zwischen den an den jeweiligen Folien **3** bestehenden Anlagerungen in Form der Granulat-Körner **7** verkleinerte Kanal-Anfänge der Waben-Kanäle **2** verbleiben, wie in **Figur 5a** **links** dargestellt, oder der Freiraum zwischen den freien Stirnkanten **3.1** der Folien **3** kann durch die Anlagerungen - überall oder nur Bereichsweise - vollständig überbrückt werden, wie in **Figur 5a** **rechts** dargestellt.

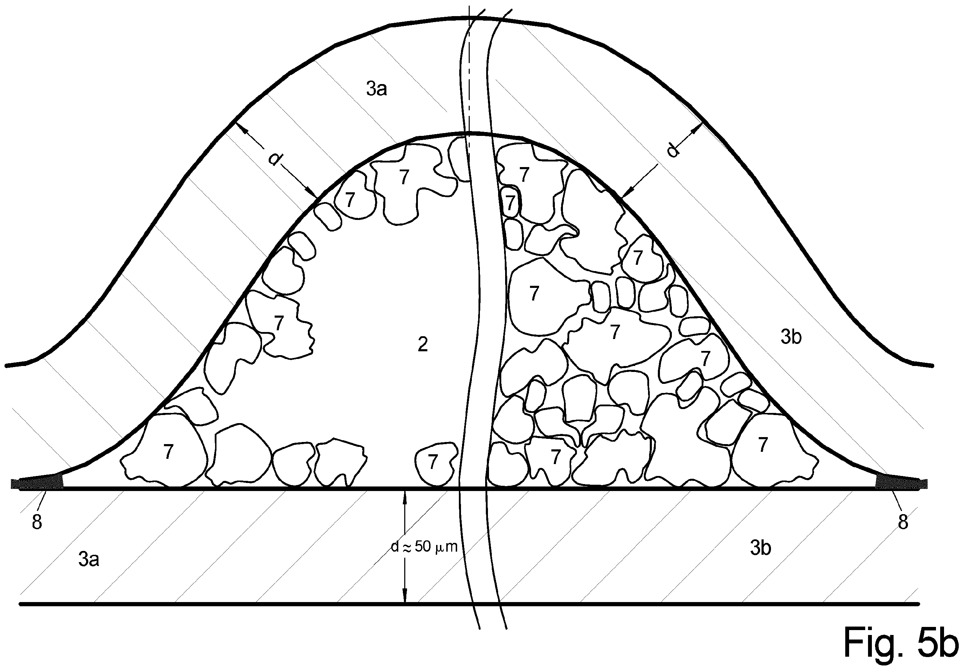

In **Figur 5b** sind anhand der Stirnansicht eines Kanales **2** beide Möglichkeiten dargestellt.

Die in den **Figuren 5a** glatt und ohne Ausfransungen dargestellten Stirnkanten **13.1** können natürlich - je nach Herstellungs- und Trennverfahren - zusätzlich noch die in den **Figuren 4a****,** **b** dargestellten Ausfransungen **17** aufweisen, um die herum sich dann natürlich ebenfalls die Granulat-Körner **7** anlagern, die aufgebracht werden in aller Regel erst nach dem Abtrennen einer Scheibe als **GDL** von einem Wabenkörper **WK.**

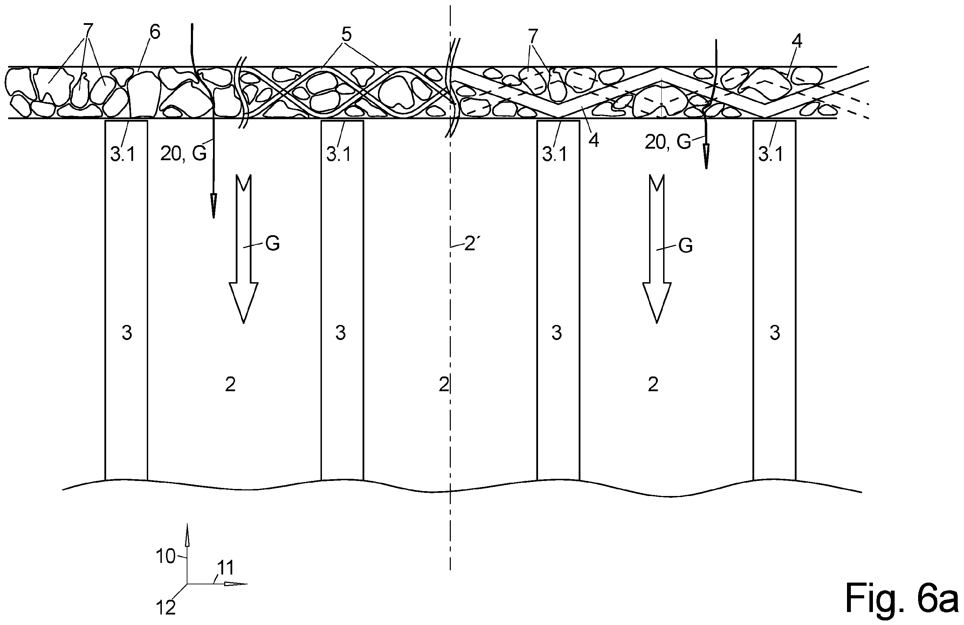

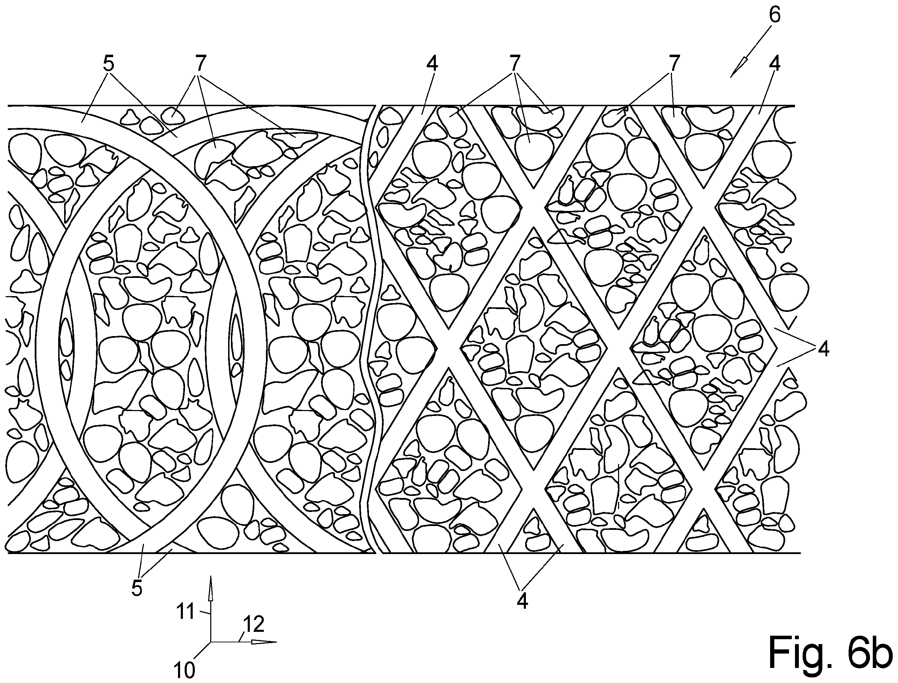

Die **Figuren 6a****,** **b** zeigen eine weitere Variante, um den Querschnitt am Anfang der Waben-Kanäle **2** zu verringern und die Anzahl möglicher dortiger Kontaktpunkte an der Vorderseite zu vergrößern:
Hierfür wird auf die Stirnkanten **3.1** der Folien **3,** deren Kanal-Richtung **2'** wiederum in axialer Richtung **10** verläuft - eine poröse Schicht **6** aufgelegt, die im Wesentlichen aus aneinanderhaftenden Granulat-Körnern **7** besteht.

Um als Schicht gehandhabt werden zu können, beispielsweise als flexibler Film, sind diese Granulat-Körner dabei z.B. in einem sehr feinen Gewebe **5,** vorzugsweise aus Metallfasern, oder in einem sehr feinen Streckmetall **4** aufgenommen - deren Maschengrößen vorzugsweise gleich oder kleiner, vorzugsweise höchstens die Hälfte, der Querschnitte der Waben-Kanäle **2** betragen - und füllen deren Hohlräume aus, wie am besten in **Figur 6b** zu erkennen, wobei die Hohlräume vorzugsweise flächendeckend von den Granulat-Körnern **7** gefüllt sein sollen und/oder über die von den vorderen Stirnkanten 3.1 abgewandten Vorderseite des Streckmetalls 5 oder des Gewebes 4 vorstehen.

Bei den Granulat-Körnern **7** der **Figur 6a****,** **b** als auch der **Figuren 5a****,** **b** als auch bei Granulat-Körner, die in den nachfolgenden Figuren dargestellt sind, handelt es sich vorzugsweise um durch Sintern miteinander verbundene Sinter-Körner und damit vorzugsweise um Granulat-Körner aus Metall, die durch partielles miteinander Verschweißen infolge des Sinter-Prozesses sowohl gegeneinander, vorzugsweise auch mit dem Material, an dem sie anhaften- also Folien **3,** Gewebe **5** oder Streckmetall **4** - fixiert sind.

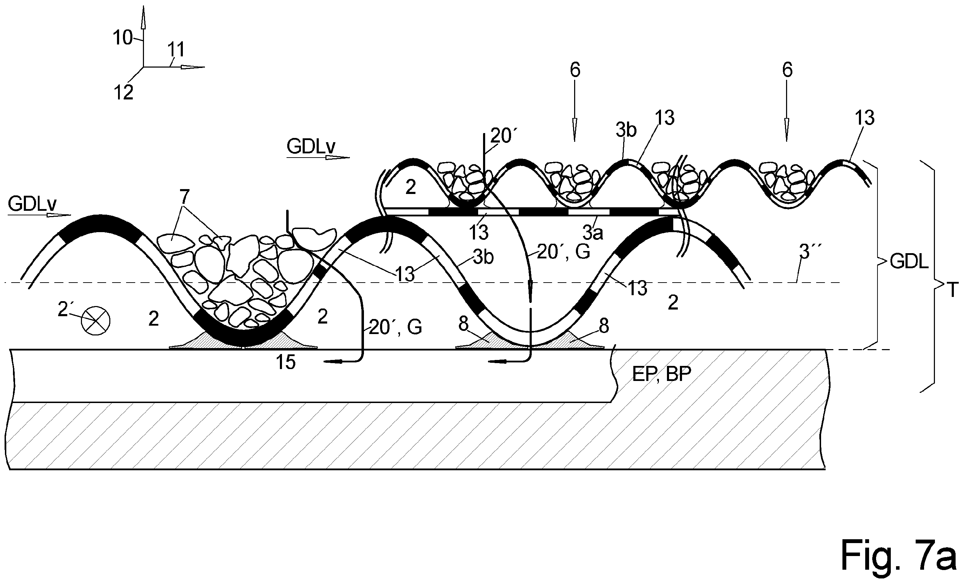

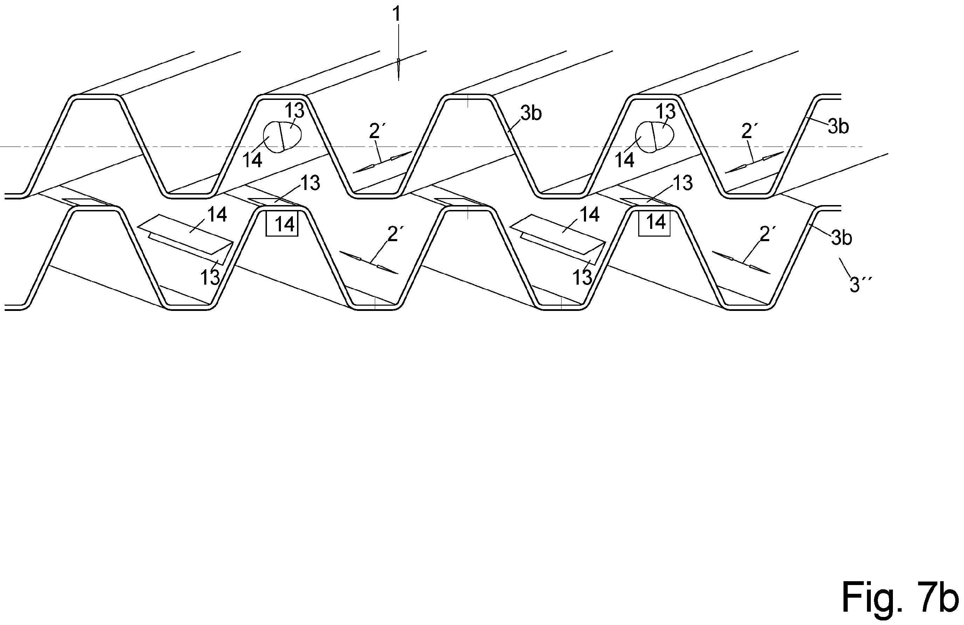

Die **Figuren 7a****,** **b** zeigen eine prinzipielle zweite Möglichkeit, wie aus definiert 3-dimensional strukturierten Folien **3a, b ein GDL** hergestellt werden kann, wobei in diesem Fall die Kanal-Richtung **2'** der Folien-Kanäle **2** quer zur axialen Richtung **10** des **GDL** sowie des damit erstellten Trägerelementes **T** verläuft, gleichwohl aber Strömungs-Kanäle für das Gas in axialer Richtung **10,** also von der Vorderseite **GDLv** zur Rückseite **GDLr** des **GDL** in ausreichender Größe und Anzahl vorhanden sind.

Wie **Figur 7a** zeigt, ist eine 3-dimensional strukturierte, vorzugsweise gewellte, Folie **3b** oder eine anderweitig quer zu ihrer Hauptebene **3"** strukturierte Folie, vorzugsweise definiert strukturierte Folie, mit ihrer Hauptebene **3"** an einer Endplatte **EP** und parallel zu dieser fixiert, in diesem Fall mittels Verlöten, indem einige, eine Vielzahl oder auch möglichst alle Kontaktstellen der Folie **3b** mit der Endplatte **EP** verlötet sind mittels Lotmaterial **8,** welches zuvor entweder auf den entsprechenden Flächenbereichen der Folie **3b** oder Endplatte **EP** aufgebracht wurden.

Damit Durchtritts-Kanäle für das Gas **G** durch die Folie **3b** hindurch existieren, besitzt diese eine Vielzahl von Durchbrüchen **13,** die - vorzugsweise vor dem Wellen der Folie **3b** - definiert oder undefiniert in diese eingebracht wurden.

Auf dieser an der Endplatte **EP** befestigten, vorzugsweise verlöteten, ersten Schicht der Folie **3b** kann - direkt wie im rechten Teile der **Figur 7a** dargestellt oder unter Zwischenlage einer glatten Folie **3a** wie im mittleren Teil dargestellt - auf der von der Vorderseite der Endplatte abgewandten Vorderseite der Folie **3b** eine weitere 3-dimendional strukturierte, vorzugsweise gewellte Folie **3b** aufgelegt und fixiert sein, die vorzugsweise eine kleiner dimensionierte Wellung oder Strukturierung aufweist als die erste Folie, vorzugsweise wiederum durch Verlöten, aber natürlich jeweils ebenfalls eine dreidimensionale Strukturierung aufweisen:
In den zu dieser Vorderseite des so gebildeten **GDL** hin offenen Vertiefungen in Form der Wellen oder anderen 3-dimensionalen Strukturierung der am weitesten von der Endplatte **EP** entfernten Folie **3b** können zusätzlich wiederum als poröse Füllung **6** aneinander haftender Granulat-Körner **7** eingebracht und fixiert sein und diese weitestgehend, nämlich bis zur Höhe der Aufwölbungen dieser Folie **3b** oder gar etwas drüber hinaus - aufgefüllt sein, wobei es sich vorzugsweise wieder um gegeneinander versinterte Sinter-Körner handelt.

Dadurch werden wieder eine Vielzahl kleinflächiger Kontaktstellen oder Kontaktflächen in der Vorderseite **GDLv** des **GDL** zur Verfügung gestellt, und das dort entstehende Gas kann durch die Zwischenräume zwischen den Granulat-Körnern **7,** von dort durch die Durchbrüche **13** in den Folien bis in die Sammel-Kanäle **15** in der Endplatte **EP** abfließen, wie anhand der Strömungs-Richtung **20'** dargestellt.

**Figur 7b** zeigt eine perspektivische Aufsicht auf eine Frontfläche **GDLv** eines **GDL,** bei dem zwei gewellte Folien **3b** mit insbesondere jeweils im Querschnitt trapezförmiger Wellung, aber in der Aufsicht betrachtet im Winkel zueinander verlaufenden Waben-Kanalrichtungen **2',** noch ohne poröse Schicht **6** aufeinander liegen. Dementsprechend können die Durchbrüche **13** überall in der Folie **3b**, auch in den höchsten und tiefsten Teilen des Querschnittes der Wellung, angeordnet sein.

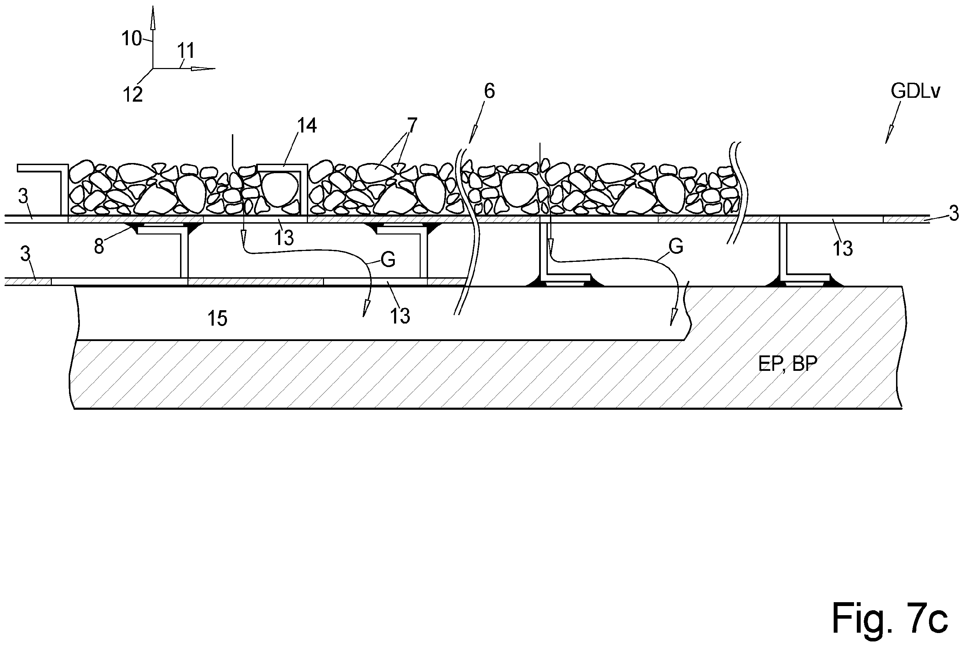

**Figur 7c** zeigt die Verwendung einer dreidimensional strukturierten Folie **3** gemäß **Figur 1c** in einem **GDL,** deren Hauptebene quer, insbesondere lotrecht, zur axialen Richtung **10** des **GDL** verläuft, wobei wiederum der GDL durch eine an seiner Rückseite angelegte Endplatte **EP** zu einem Trägerelement komplettiert ist.

Im **linken** Teil dieser **Figur 7c** liegen zwei dieser Folien **3** aufeinander, wobei die ausgeprägten Laschen **14** nach vorne, also in Richtung Vorderseite **GDLv** des **GDL,** weisen. Die beiden Lagen der Folie **3** sind an ihren Berührungsstellen gegeneinander verlötet mittels Lotmaterial **8.**

Dabei ist auf der Frontseite der vorderen Folie **3** eine poröse Schicht **6** aus aneinanderhaftenden Pulver-Körnern **7** aufgebracht, die eine Dicke besitzt entsprechend dem Überstand der ausgeprägten Laschen **14** über die den Rest der Folie **3** hinaus, aus der heraus sie ausgeprägt sind, was durch Abziehen über die freien Enden der Laschen **14** hinweg beim z.B. Aufstreichen der Schicht **6** möglich ist.

Entstehendes Gas strömt also durch die Zwischenräume zwischen den Pulver-Körnern **7** und die durch die ausgeprägten Laschen gebildeten Durchbrüche **13** der Folie **3** hindurch in Sammelkanäle **15,** die in diesem Fall in der Endplatte **EP** ausgebildet sind.

Im **mittleren** Bereich der **Figur 7c** ist nur eine Lage dieser Folie **3** vorhanden, die sich in diesem Fall mit ihren ausgeprägten Laschen **14** auf der Endplatte **EP** abstützt und auch mit dieser verlötet oder verschweißt sein kann, sodass die Frontseite des **GDL** durch eine ebene Folie mit Durchbrüchen **13** gebildet wird. Die poröse Schicht **6** kann deshalb dort in beliebiger Dicke aufgebracht und fixiert werden, zum Beispiel durch Aufsintern.

Im **rechten** Bereich der **Figur 7c** fehlt diese poröse Schicht, und der ebene Hauptteil der Folie **3** bildet die Vorderseite **GDLv** des **GDL.**

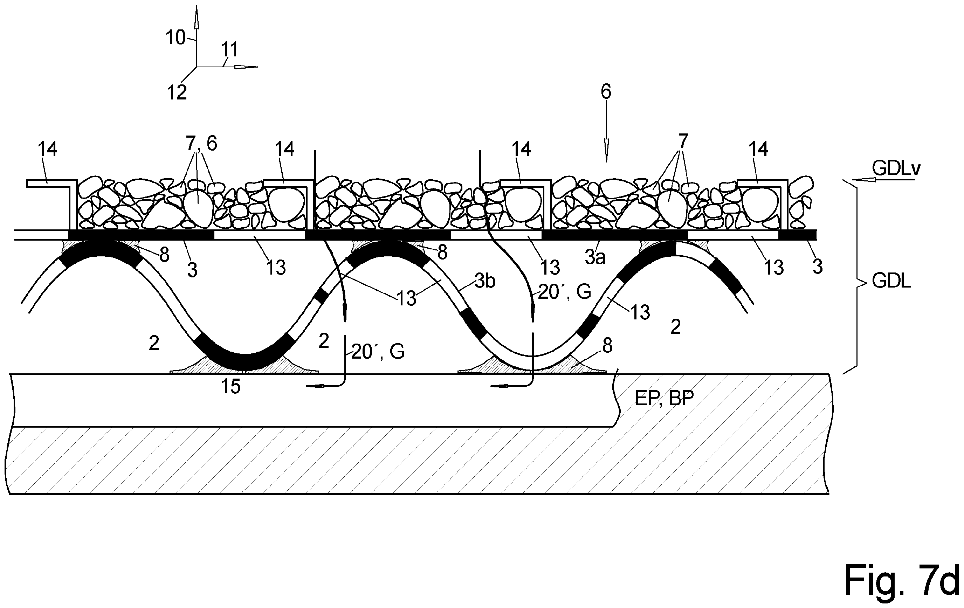

**Figur 7d** zeigt einen auf einer Endplatte **EP** bereits aufgelöteten **GDL,** bei dem die an der **EP** befestigte Schicht aus einer gewellten Folie **3b** mit einer Vielzahl von Durchbrüchen **13** in der Folie besteht, auf der eine dreidimensional strukturierte Folie **3** gemäß **Figur 1c** aufgelegt ist, als die die Vorderseite **GDLv** des **GDL** darstellt und die wiederum mit einer porösen Schicht **6** aus Granulat-Körnern **7** über die gesamte Höhe ihrer dreidimensionalen Strukturierung verfüllt ist.

Das Gas **G** strömt somit von der Vorderseite **GDLv** aus durch die kleinen Hohlräume zwischen den Granulat-Körnern **7,** die Durchbrüche **13** in der dreidimensionale strukturierten Folie **3,** von dort in die Kanäle **2** der gewellten Folie **3b** durch deren Durchbrüche **13** hindurch und weiter in die Sammelkanäle **15** auf der dem **GDL** zugewandten Seite der Endplatte **EP.**

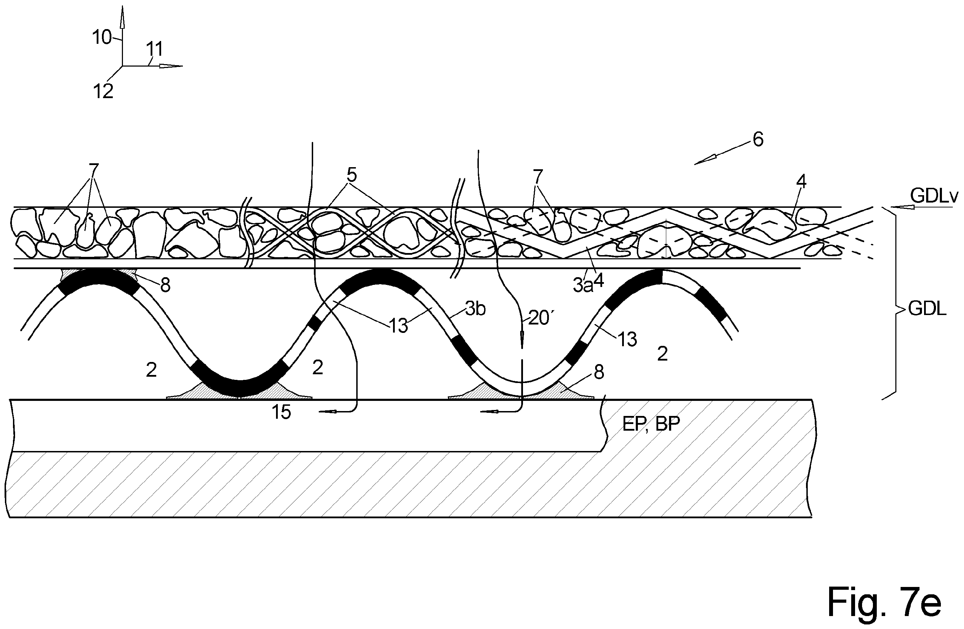

**Figur 7e** unterscheidet sich von der **Figur 7d** dadurch, dass auf der gewellten Folie **3b** mit ihren Durchbrüchen **13** eine poröse Schicht **6** aufgebracht und fixiert ist, bei der die Granulat-Körner **7** insbesondere in den Hohlräumen eines feinen Gewebes **5** (mittlere Bildteil) oder eines feinen Streckmetalls **4** (rechter Bildteil) aufgenommen sein können oder auf andere Art und Weise, etwa durch Verkleben oder Versintern (linker Bildteil) zu einer handhabbaren Schicht miteinander verbunden sein können.

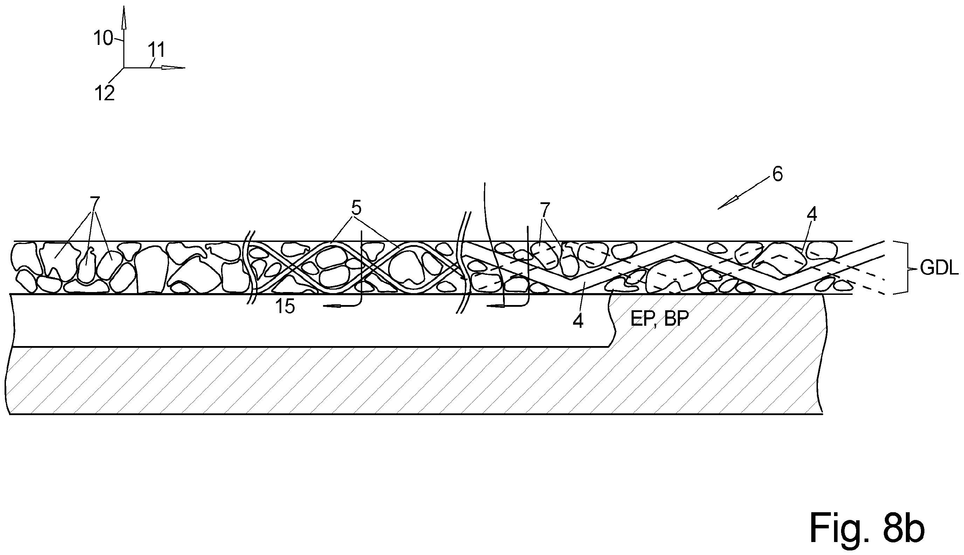

**Figur 8b** zeigt einen **GDL,** der sich von der Lösung gemäß Figur 7b E-Mail dadurch unterscheidet, dass die gewellte Folie 3b fehlt, also die poröse Schicht 6 direkt auf der Endplatte EP oder Bipolarplatte WP aufgebracht ist, bei der wiederum die Granulat-Körner **7** insbesondere in den Hohlräumen eines feinen Gewebes **5** (mittlere Bildteil) oder eines feinen Streckmetalls **4** (rechter Bildteil) aufgenommen sein können oder auf andere Art und Weise, etwa durch Verkleben oder Versintern (linker Bildteil) zu einer handhabbaren Schicht miteinander verbunden sein können

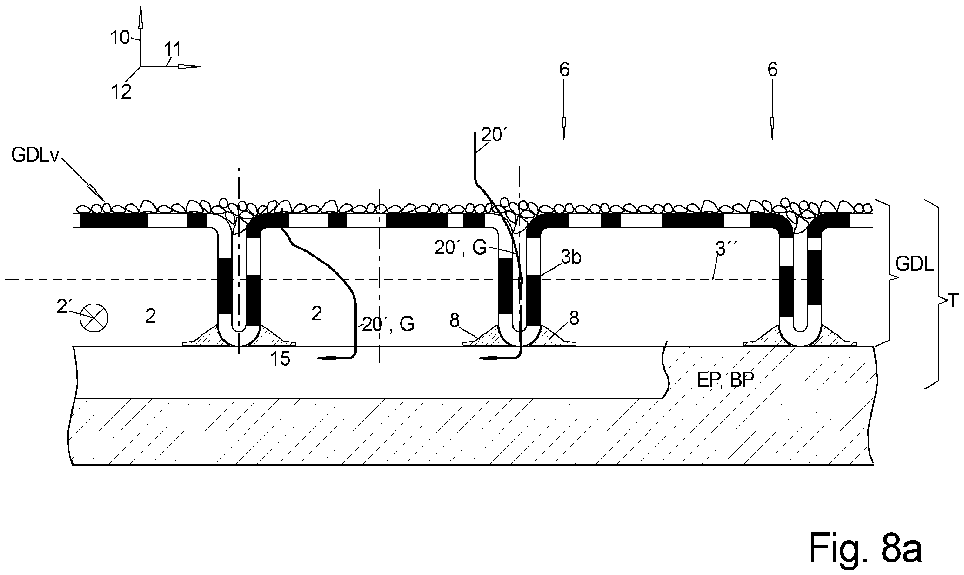

**Figur 8a** zeigt dagegen eine Abwandlung der Bauform gemäß **Figur 7a****,** linke Bildhälfte:
Dabei ist wiederum eine gewellte Folie **3b** mit ihrer Hauptebene **3"** an einer Endplatte **EP** und parallel zu dieser fixiert, wiederum beispielsweise mittels Verlöten, indem einige, eine Vielzahl oder auch möglichst alle Kontaktstellen der Folie **3b** mit der Endplatte **EP** verlötet sind mittels Lotmaterial **8,** welches zuvor entweder auf den entsprechenden Flächenbereichen der Folie **3b** oder Endplatte **EP** aufgebracht wurden.

Damit Durchtritts-Kanäle für das Gas G durch die Folie **3b** hindurch existieren, besitzt auch hier die gewellte Folie **3b** eine Vielzahl von Durchbrüchen **13,** die - vorzugsweise vor dem Wellen der Folie **3b** - definiert oder undefiniert in diese eingebracht wurden.

Allerdings sind hier die zu dieser Vorderseite **GDLv** des so gebildeten **GDL** hin offenen Vertiefungen der Wellung der Folie **3b** hinsichtlich ihres Querschnittes sehr schmal ausgebildet, insbesondere so schmal, wie es das Herstell-Verfahren zum Herstellen der Wellen noch zulässt.

Die diese jeweilige Vertiefung begrenzenden Flanken der Wellung verlaufen dabei vorzugsweise zueinander parallel oder sich nur in einem kleinen Winkel zueinander zur offenen Vorderseite GDLv auseinanderlaufenden Winkel angeordnet, sodass diese Vertiefungen und deren Flanken primär als Abstandshalter für die Wellenberge dazwischen gegenüber der Endplatte EP dienen. Auch diese sind anders gestaltet, und besitzen zumindest einen parallel zur Hauptebene der Endplatte EP verlaufenden Abschnitt, insbesondere nur einen solchen Abschnitt, sodass in dieser Querschnittsansicht der Folie **3b** statt der Wellenform eine Portal-Kette aus aufeinanderfolgenden und ineinander übergehenden Portalen, also auf dem Kopf stehenden U-Abschnitten, gebildet wird

Auch hier ist zusätzlich wiederum eine poröse Schicht **6** aus aneinanderhaftenden Granulat-Körnern **7** auf der von der Endplatte **EP** abgewandten Frontseite der Folie 3b aufgebracht und an dieser fixiert, wobei es sich vorzugsweise wieder um gegeneinander versinterte Sinter-Körner handelt.

Von diesen werden jedoch nur relativ wenige in die schmalen Vertiefungen der wie vorgeschrieben verformten Folie 3b eindringen, und der weitaus größere Teil dieser Körner **7** wird als Schicht auf den frontseitigen Oberseiten der Portale aufliegen, auch über die Vertiefungen hinweg.

Dadurch werden wieder eine Vielzahl kleinflächiger Kontaktstellen oder Kontaktflächen in der Vorderseite **GDLv** des **GDL** zur Verfügung gestellt, und das dort entstehende Gas **G** kann durch die Zwischenräume zwischen den Granulat-Körnern **7,** von dort durch die Durchbrüche **13** in der Folie **3b** bis in die Sammel-Kanäle **15** in der Endplatte **EP** abfließen, wie anhand der Strömungs-Richtung **20'** dargestellt.

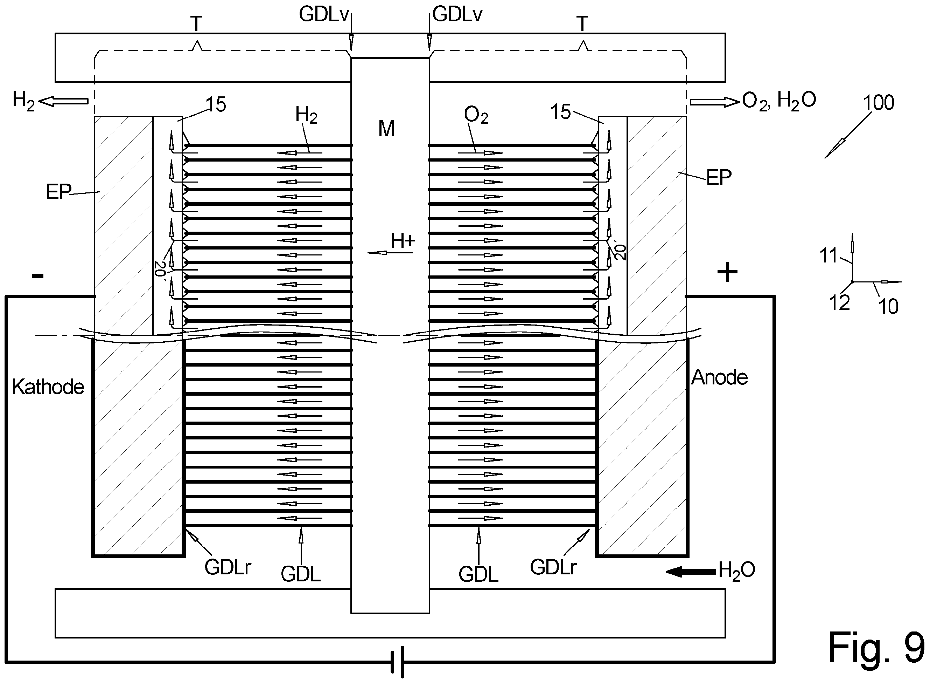

**Figur 9** zeigt eine Prinzip-Darstellung einer einzigen Zelle eines Elektrolyseurs **100,** bei dem als beidseits gleiche Trägerelemente **T** die Trägerelemente **T** gemäß **Figur 3** verwendet sind, und der nach dem PEM-Prinzip arbeitet.

Da die Trägerelemente **T** aus elektrisch leitfähigem Metall bestehen, dienen sie gleichzeitig als Elektroden und Stromverteiler zum Verteilen des Stromes über die vielen Kontaktstellen zwischen der Vorderseite **GDLv** und der - nicht separat dargestellten - aktiven Schicht, die an der anodenseitigen Hauptfläche der folienförmigen Membran **M** aufgebracht ist, die in diesem Fall eine lonen-Austauscher-Membran ist.

Die auf der Anodenseite durch Spaltung des Wassers entstehenden Wasserstoff-Ionen H+ treten durch die lonen-Austausch-Membran M und werden auf der anderen Seite nach Aufnahme eines Elektrons durch jedes Wasserstoff-Ion von der dortigen Kathode zu einem Wasserstoff-Molekül und durch den GDL hindurch in axialer Richtung **10** abgeführt über die Sammelkanäle **15** der Endplatte **EP** und aus dem Elektrolyseur 100 heraus.

### BEZUGSZEICHENLISTE

- 1: Kanal der GDL
- 2: Kanal der Folie, Folien-Kanal, Waben-Kanal
- 2': Kanal-Richtung
- 3: Folie
- 3.1, 3.2: Stirnkante
- 3a: gewellte Folie
- 3b: glatte Folie
- 4: Streckmetall
- 5: Gewebe
- 6: poröse Schicht, Füllung
- 7: Granulatkorn, Pulverkorn, Sinterkorn
- 8: Lot, Lotmaterial
- 9: Draht
- 10: axiale Richtung des GDL
- 11: 1. Haupterstreckungs-Richtung GDL
- 12: 2. Haupterstreckungs-Richtung GDL
- 13: Durchbruch
- 14: ausgeprägte Lasche
- 15: Sammel-Kanal
- 16: Rohrstück, Rohrhülle
- 17: Ausfransung
- 18: Kante
- 19: Traglage
- 20: Strömungs-Kanal, Gas-Kanal
- 20': Strömungs-Richtung

- 100: Elektrolyseur
- d: Dicke der Folie
- BP: Bipolar-Platte
- CD: Strom-Verteiler
- EP: Endplatte
- G: Gas
- GDL: Gas-Diffusion-Layer
- GDLv: Vorderseite des GDL
- GDLr: Rückseite des GDL
- M: Membran
- T: Trägerelement
- WK: Wabenkörper

## Patentansprüche

1. **Gas-Diffusions-Layer** (GDL), insbesondere aus einem elektrisch leitenden Material, für einen Elektrolyseur (100) oder eine Brennstoffzelle
- mit Gas-Kanälen (20), die von deren Vorderseite (GDLv) und zu deren Rückseite (GDLr) verlaufen, für die Abfuhr zumindest eines an der Vorderseite entstehenden Gases (G) zur Rückseite (GDLr) des, insbesondere plattenförmigen, GDL,
- wobei die Gas-Kanäle (20) primär axial, also quer zur Vorderseite (GDLv), verlaufen, insbesondere lotrecht zur Vorderseite (GDLv) verlaufen.
- mit wenigstens einer Traglage (19) aus mindestens einer Folie (3), insbesondere einer Metall-Folie, die eine dreidimensionale Strukturierung aufweist oder aus einem von einem Gas durchströmbaren, dreidimensionalen Material mit offenzelligen Hohlräumen wie einem Gewebe, einem Vlies oder erstarrtem Schaum.
(Beschichtung oder Füllung mit porösem Körper, insbesondere Sinter-Metall:)

2. Gas-Diffusions-Layer nach Anspruch 1,
**dadurch gekennzeichnet, dass**
- der Querschnitt der Gas-Kanäle (20) von der Vorderseite (GDLv) vorzugsweise zur Rückseite (GDLr) zunimmt,
- insbesondere nicht abnimmt,
- insbesondere nur zunimmt.

3. Gas-Diffusions-Layer nach Anspruch 1 oder 2,
**dadurch gekennzeichnet, dass**
die Traglage (19) auf der Vorderseite des GDL
- mit einer porösen Beschichtung (6), deren, insbesondere durchschnittliche, Porengröße insbesondere wesentlich geringer ist als die Hohlräume der dreidimensionalen Strukturierung der Vorderseite, beschichtet ist
- insbesondere wesentlich geringer als die durch die dreidimensionale Strukturierung der Folie (3) geschaffenen Hohlräume.

4. Gas-Diffusions-Layer nach einem der vorhergehenden Ansprüche,
**dadurch gekennzeichnet, dass**
- der Querschnitt der Gas-Kanäle (20), an der Vorderseite (GDLv), insbesondere, wenn diese dort gebildet werden durch eine poröse Schicht, mindestens um den Faktor 3, besser mindestens um den Faktor 5, besser mindestens um den Faktor 8, besser mindestens um den Faktor 15, geringer ist als der Querschnitt der Gas-Kanäle (20) an der Rückseite (GDLr),
und/oder
- der Querschnitt der Gas-Kanäle (20), an der Vorderseite (GDLv), insbesondere, wenn diese dort gebildet werden durch eine poröse Schicht, geringer ist als 800 µm², insbesondere geringer als 300 µm2, insbesondere geringer als 100 µm2, insbesondere geringer als 15 µm2, insbesondere geringer als 20 µm2.

5. Gas-Diffusions-Layer nach einem der vorhergehenden Ansprüche,
**dadurch gekennzeichnet, dass**
- der Querschnitt der Gas -Kanäle (2) an der Vorderseite (GDLv), insbesondere, wenn dort keine poröse Schicht vorhanden ist, geringer ist als 0,15 mm2 = 150.000 µm², insbesondere geringer als 0,1 mm2 = 100.000 µm², insbesondere geringer als 0,08 mm2 = 80.000 µm²,
und/oder
- der Querschnitt der Gas-Kanäle (20) an der Rückseite (GDLr) größer ist als 0,15 mm², insbesondere größer als 0,20 mm², insbesondere größer 0,50 mm², insbesondere größer als 1 mm2, insbesondere größer als 3 mm2, insbesondere größer als 5 mm2.
(Folien-Stege parallel und/oder axial:)

6. Gas-Diffusions-Layer nach einem der vorhergehenden Ansprüche,
**dadurch gekennzeichnet, dass**
der GDL, insbesondere bei sich in axialer Richtung (10) aneinander anschließenden mehreren Schichten,
- solche Folien (3) umfasst, von denen eine der beiden HaupterstreckungsRichtungen (11, 12) der Folie (3), insbesondere der dreidimensionalen strukturierten Folie (3), axial verläuft,
und/oder
- solche Folien (3) umfasst, von denen eine der beiden HaupterstreckungsRichtungen (11, 12) der Folie (3), insbesondere der dreidimensional strukturierten Folie, parallel zur Frontfläche verläuft,
und/oder
- die Folie (3) eine Dicke von unter 150 µm, insbesondere von unter 100 µm, insbesondere von unter 60 µm besitzt.

7. Gas-Diffusions-Layer nach einem der vorhergehenden Ansprüche,
**dadurch gekennzeichnet, dass**
- die poröse Beschichtung (6) die durch die dreidimensionale Strukturierung der Folie (3) vorhandenen Vertiefungen in der Vorderseite des GDL als poröse Füllung, deren Porengröße insbesondere wesentlich geringer ist als die durch die dreidimensionale Strukturierung der Folie (3) geschaffenen Hohlräume, wenigstens teilweise füllt.

8. Gas-Diffusions-Layer nach einem der vorhergehenden Ansprüche,
**dadurch gekennzeichnet, dass**
- insbesondere die Beschichtung oder Füllung aus aneinanderhaftenden Körnern (7) mit Hohlräumen dazwischen, insbesondere aus Sinter-Metall, besteht.
(Details zum Wabenkörper:)

9. Gas-Diffusions-Layer nach einem der vorhergehenden Ansprüche,
**dadurch gekennzeichnet, dass**
der GDL als Traglage (19)
- einen Wabenkörper (WK) aus mehreren gewickelten oder geschichteten Lagen aus einer oder mehreren Folien (3) umfasst,
und/oder
- Streckmetall in einer oder mehreren Lagen jeweils aus Folie (3) umfasst, wodurch primär axial gerichtete, offen durchgängige Waben-Kanäle (2) gebildet werden.

10. Gas-Diffusions-Layer nach einem der vorhergehenden Ansprüche,
**dadurch gekennzeichnet, dass**
- die Lagen strukturierte, insbesondere gewellte, Lagen sind,
- insbesondere mit einer glatten Lage zwischen je zwei strukturierten Lagen,
- insbesondere mit Durchbrüchen (13) in den Lagen, insbesondere in der strukturierten Lage.
(Material:)
(Große parallele Kanäle in einer der Hauptflächen:)

11. Gas-Diffusions-Layer nach einem der vorhergehenden Ansprüche,
**dadurch gekennzeichnet, dass**
- bei mehr als einer Lage des Wabenkörpers (WK) mindestens eine Lage, insbesondere die glatte Lage, an der Vorderseite und/oder Rückseite in axialer Richtung weiter vorsteht als die übrigen Lagen, und
- die Vorderkante der weiter vorstehenden mindestens einen Lage eine vordere, insbesondere ebene, vordere Frontfläche definiert, und insbesondere die Vorderkante der zurückstehenden anderen Lage eine, insbesondere Ebene, hintere Frontfläche definiert so dass zwischen der vorderen und der hinteren Frontfläche parallel zur Frontfläche verlaufende Sammel-Kanäle (15) gebildet werden.

12. **Trägerelement (T)** aus einem GDL sowie einer an dessen Rückseite angeordneten Endplatte (EP), insbesondere einer Bipolarplatte (BP) aus einem elektrisch leitenden Material,
**dadurch gekennzeichnet, dass**
der GDL nach einem der vorhergehenden Ansprüche ausgebildet ist.

13. Trägerelement nach Anspruch 12,
**dadurch gekennzeichnet, dass**
der GDL mit der Endplatte (EP), insbesondere der Bipolarplatte (BP) verlötet oder verschweißt ist.

14. **Verwendung** eines GDL nach einem der vorhergehenden Ansprüche oder eines Trägerelementes (T) nach einem der vorhergehenden Ansprüche im Rahmen eines Elektrolyseurs (100) oder einer Brennstoffzelle, dort direkt oder indirekt mit der Vorderseite angelegt an eine für Elektrolyt nicht durchlässige Membran (M), insbesondere eine lonen-Austausch-Membran (M) oder ein für Elektrolyt durchlässiges Diaphragma.

15. **Elektrolyseur (100),** insbesondere Wasser-Elektrolyseur (100), mit mindestens einer von mehreren axial aufeinanderfolgenden Zellen, wobei eine Zelle von der Anodenseite zur Kathodenseite folgende Schichten umfasst
- ein Anoden-Trägerelement umfassend
- eine Anoden-Endplatte (A-EP), insbesondere ausgebildet als Bipolar-Platte (BP),
- einen Anoden-Gas-Diffusions-Layer (A-GDL),
- entweder eine für Elektrolyt nicht durchlässige und/oder insbesondere für Wasserstoff-Protonen durchlässige Membran (M) oder ein für Elektrolyt durchlässiges Diaphragma,
- ein Kathoden-Trägerelement umfassend
- einen Kathoden-Gas-Diffusions-Layer (K-GDL)
- eine Kathoden-Endplatte (K-EP), insbesondere ausgebildet als Bipolar-Platte (BPP),
- eine Fixiervorrichtung, insbesondere Verschraubung, der Endplatten (EP) mit Vorspannung gegeneinander
**dadurch gekennzeichnet, dass**
- wenigstens der Anoden-GDL (A-GDL), insbesondere beide Gas-Diffusions-Layer (GDLs) und/oder wenigstens eines, insbesondere beide, Trägerelemente (T) nach einem der vorhergehenden Ansprüche ausgebildet und/oder hergestellt sind.

16. Elektrolyseur nach Anspruch 15,
**dadurch gekennzeichnet, dass**
- eine katalytische Beschichtung zwischen der Membran (M) und dem Gas-Diffusions-Layer (GDL) vorhanden ist,
und/oder
- ein Strom-Verteiler (CD) zwischen der Membran (M) und dem Gas-Diffusions-Layer (GDL) vorhanden ist,
und/oder
- Dichtungen, insbesondere ganzseitig umlaufende Dichtungen, zwischen den einzelnen Schichten vorhanden sind.

17. **Verfahren zur Herstellung** des Trägerelementes nach Anspruch 12,
**dadurch gekennzeichnet, dass**
- einerseits auf der Endplatte (EP), insbesondere der Bipolarplatte (BP), oder der daran zu befestigenden Seite der hintersten Schicht des GDL ein 1. Lotmaterial (8) aufgebracht wird,
- die Endplatte (EP) mit dem GDL verlötet wird,
- andererseits im Bereich der Vorderseite des GDL ein Haftmittel für eine Beschichtung oder Verfüllung der Hohlräume im GDL aufgebracht wird,
- die Beschichtung oder Verfüllung durch Anhaften an dem Haftmittel aufgebracht wird,
- die Beschichtung oder Verfüllung ausgehärtet, insbesondere gesintert, wird,
- hiervon derjenige der beiden thermischen Vorgänge, der eine höhere Temperatur erfordert, zuerst durchgeführt wird, danach der andere der beiden thermischen Vorgänge.

18. Verfahren nach Anspruch 17,
**dadurch gekennzeichnet, dass**
bei Aufbringen des Lotmaterials (8) auf der Endplatte (EP), insbesondere der Bipolarplatte (BP), das Lotmaterial (8) flächendeckend zumindest auf der dem GDL zugewandten Seite der Endplatte (EP), insbesondere auf der gesamten Oberfläche der Endplatte (EP), aufgebracht wird.
